(19) Europäisches Patentamt / European Patent Office / Office européen des brevets

(11) **EP 4 694 299 A1**

(12) **EUROPEAN PATENT APPLICATION**
published in accordance with Art. 153(4) EPC

(43) Date of publication:
**11.02.2026 Bulletin 2026/07**

(21) Application number: **23931590.6**

(22) Date of filing: **07.04.2023**

(51) International Patent Classification (IPC):
**H04W 24/10** (2009.01)

(52) Cooperative Patent Classification (CPC):
**H04W 24/10**

(86) International application number:
**PCT/CN2023/087146**

(87) International publication number:
**WO 2024/207530 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventors:
• LIU, Zhengxuan
  **Beijing 100085 (CN)**
• LIU, Min
  **Beijing 100085 (CN)**

(74) Representative: **Dehns Germany Partnerschaft mbB**
**Theresienstraße 6-8**
**80333 München (DE)**

(54) **CHANNEL STATE INFORMATION (CSI) PROCESSING METHOD AND APPARATUS**

(57) The present disclosure relates to the technical field of communications. Provided are a channel state information (CSI) processing method and apparatus. The CSI processing method provided in the present disclosure comprises: a user equipment (UE) receiving configuration information, which is sent by a network device, wherein the configuration information is used for configuring uplink resources; and when the uplink resources are insufficient for use in reporting all pieces of CSI, reporting a first piece of CSI among all the pieces of CSI to the network device by means of a target CSI reporting mode, wherein the target CSI reporting mode comprises an AI-based CSI reporting mode and/or a conventional CSI reporting mode, and the first piece of CSI is obtained after a second piece of CSI is discarded from all the pieces of CSI. By means of the present disclosure, when uplink resources are insufficient, part of CSI can be rationally discarded, and certain system performance can be ensured.

receiving configuration information sent by a network device, in which the configuration information is used for configuring an uplink (UL) resource —— 101

in a case that the UL resource is insufficient for reporting complete CSI, reporting a first CSI of the complete CSI to the network device in a target CSI reporting mode, in which the first CSI is obtained after discarding a second CSI of the complete CSI —— 102

FIG. 2

**Description**

**TECHNICAL FIELD**

The disclosure relates to a field of communication technologies, and specifically to a method and an apparatus for processing channel state information (CSI).

**BACKGROUND**

Current research and simulation results indicate that artificial intelligence (AI) technology may be adopted to reduce feedback overhead of a terminal or improve the accuracy of channel state information (CSI) feedback. In the 3rd Generation Partnership Project (3GPP) standardization research, a bilateral AI/machine learning (ML) model has been developed based on a CSI generation model at a user equipment (UE) side and a CSI reconstruction model at a network device side, to achieve CSI feedback compression and reconstruction, respectively.

For CSI feedback compression based on the bilateral AI/ML model, when uplink resources are insufficient, some information in the AI-based CSI feedback needs to be discarded. However, how to reasonably discard a part of CSI while ensuring certain system performance is an urgent problem that needs to be solved.

**SUMMARY**

The present disclosure provides a method and an apparatus for processing channel state information (CSI), which may reasonably discard part of the CSI when uplink (UL) resources are insufficient and may ensure certain system performance.

In a first aspect of embodiments of the present disclosure, a method for processing CSI is provided, which is applied to a user equipment (UE). The method includes: receiving configuration information sent by a network device, in which the configuration information is used for configuring a UL resource; in a case that the UL resource is insufficient for reporting the complete CSI, reporting a first CSI of the complete CSI to the network device in a target CSI reporting mode, in which the target CSI reporting mode includes an artificial intelligence (AI)-based CSI reporting mode and/or a legacy CSI reporting mode, and the first CSI is obtained after discarding a second CSI of the complete CSI.

In a second aspect of embodiments of the present disclosure, a method for processing CSI is provided, which is applied to a network device. The method includes: sending configuration information to a UE, in which the configuration information is used for configuring a UL resource; and receiving a first CSI of the complete CSI reported by the UE in a target CSI reporting mode, in which the target CSI reporting mode includes an AI-based CSI reporting mode and/or a legacy CSI reporting mode, and the first CSI is obtained by the UE after discarding a second CSI from the complete CSI in a case that the UL resource is insufficient for reporting the complete CSI.

In a third aspect of embodiments of the present disclosure, an apparatus for processing CSI is provided, which is applied to a UE. The apparatus includes a receiving module and a sending module.

The receiving module is configured to receive configuration information sent by a network device, in which the configuration information is used for configuring a UL resource.

The sending module is configured to report a first CSI of the complete CSI to the network device in a target CSI reporting mode in a case that the UL resource is insufficient for reporting the complete CSI, in which the target CSI reporting mode includes an AI-based CSI reporting mode and/or a legacy CSI reporting mode, and the first CSI is obtained after discarding a second CSI of the complete CSI.

In a fourth aspect of embodiments of the present disclosure, an apparatus for processing CSI is provided, which is applied to a network device. The apparatus includes a sending module and a receiving module.

The sending module is configured to send configuration information to a UE, in which the configuration information is used for configuring a UL resource.

The receiving module is configured to receive a first CSI of the complete CSI reported by the UE in a target CSI reporting mode, in which the target CSI reporting mode includes an AI-based CSI reporting mode and/or a legacy CSI reporting mode, and the first CSI is obtained by the UE after discarding a second CSI from the complete CSI in a case that the UL resource is insufficient for reporting the complete CSI.

In a fifth aspect of the embodiments of the disclosure, a communication device is provided, including: a transceiver; a memory; and a processor. The processor is connected to the transceiver and the memory respectively, and is configured to control wireless signal reception and transmission of the transceiver by executing computer-executable instructions on the memory, and capable of implementing the method described in the first or second aspect of the embodiments of the present disclosure.

In a sixth aspect of the embodiments of the disclosure, a computer storage medium is provided having stored computer-executable instructions that, when executed by a processor, cause the method described in the first or second aspect of the embodiments of the present disclosure to be implemented.

In a seventh aspect of the embodiments of the disclosure, a communication system is provided, including a UE and a network device. The UE is configured to perform the method described in the first aspect of the embodiments of the present disclosure. The network device is configured to perform the method described in the second aspect of the embodiments of the present disclosure.

In the method and apparatus for processing CSI according to the embodiments of the present disclosure, when the complete CSI cannot be reported based on the UL resource configured by the network device, the UE selects and discard the second CSI of the complete CSI to obtain the remaining first CSI. Then, the UE reports the first CSI of the complete CSI to the network device in the target CSI reporting mode. By the technical solution in the present disclosure, it may be achieved that part of CSI information is reasonably discarded and a certain system performance is ensured.

Additional aspects and advantages of the present disclosure will be given in part in the description below and in part will be obvious from the description below, or will be learned through practice of the present disclosure.

## BRIEF DESCRIPTION OF THE DRAWINGS

The above and/or additional aspects and advantages of the present disclosure will become apparent and readily understood from the following description of the embodiments in conjunction with the accompanying drawings.

FIG. 1 is a flowchart illustrating a method for processing channel state information (CSI) according to an embodiment of the present disclosure.
FIG. 2 is a flowchart illustrating a method for processing CSI according to an embodiment of the present disclosure.
FIG. 3 is a flowchart illustrating a method for processing CSI according to an embodiment of the present disclosure.
FIG. 4 is a flowchart illustrating a method for processing CSI according to an embodiment of the present disclosure.
FIG. 5 is a flowchart illustrating a method for processing CSI according to an embodiment of the present disclosure.
FIG. 6 is a timing diagram illustrating a method for processing CSI according to an embodiment of the disclosure.
FIG. 7 is a block diagram illustrating an apparatus for processing CSI according to an embodiment of the disclosure.
FIG. 8 is a block diagram illustrating an apparatus for processing CSI according to an embodiment of the disclosure.
FIG. 9 is a structural diagram illustrating a communication device according to an embodiment of the disclosure.
FIG. 10 is a structural diagram illustrating a chip according to an embodiment of the disclosure.

## DETAILED DESCRIPTION

Embodiments of the present disclosure are described in detail below, examples of which are shown in the accompanying drawings, throughout which the same or similar reference numerals represent the same or similar elements or elements having the same or similar functions. The embodiments described below with reference to the accompanying drawings are exemplary and are intended to explain the present disclosure but should not be understood as limiting the present disclosure.

The embodiments of the present disclosure are described in detail below, examples of which are shown in the accompanying drawings, throughout which the same or similar numbers represent the same or similar elements or elements with the same or similar functions. The embodiments described below with reference to the accompanying drawings are exemplary and are intended to be used to explain the present disclosure, but should not be understood as limiting the present disclosure. It needs to be noted that, without any conflict, the embodiments of the present disclosure and the features in these embodiments may be combined with each other.

The terms used in the embodiments of the present disclosure are only for the purpose of describing specific embodiments and are not intended to limit the embodiments of the present disclosure. As used in the embodiments of the present disclosure and the appended claims, the singular forms "a/an," and "the" are intended to include the plural forms as well, unless the context clearly indicates otherwise. It will also be understood that the term "and/or" as used herein refers to and encompasses any and all possible combinations of one or more of the associated listed items.

It should be understood that although the terms first, second, third, etc. may be used to describe various information in the embodiments of the present disclosure, such information should not be limited to these terms. These terms are used only to distinguish information of the same type from one another. For example, without departing from the scope of the embodiments of the present disclosure, first information may also be referred to as second information, and similarly, second information may also be referred to as first information. The word "if" as used herein may be interpreted as "when" or "while" or "in response to determining," depending on the context.

To facilitate understanding, the terms involved in the embodiments are first introduced.

1. First channel state information (CSI)

The first CSI is remaining CSI content with a higher priority after a user equipment (UE) discards a second CSI with a lower priority from the complete CSI based on a CSI omission strategy corresponding to the target CSI reporting mode, when an uplink (UL) resource is insufficient to report the complete CSI. A size of the remaining first CSI to be transmitted is smaller than or equal to a size of the UL resource.

2. Second CSI

The second CSI is CSI content with a lower priority selected by the UE to discard from the complete CSI based on the CSI omission strategy corresponding to the target CSI reporting mode, when the UL resource cannot be used to report the complete CSI.

3. Third CSI

The third CSI is CSI content reported by artificial intelligence (AI)-based reporting when the target CSI reporting mode is AI-based CSI reporting and the legacy CSI reporting though one CSI report.

4. Fourth CSI

The fourth CSI is CSI content reported by legacy CSI reporting when the target CSI reporting mode is AI-based CSI reporting and legacy CSI reporting though one CSI report.

5. Codeword quantization information

The codeword quantization information is a binary bit stream obtained by quantizing after the CSI generation model compresses codewords.

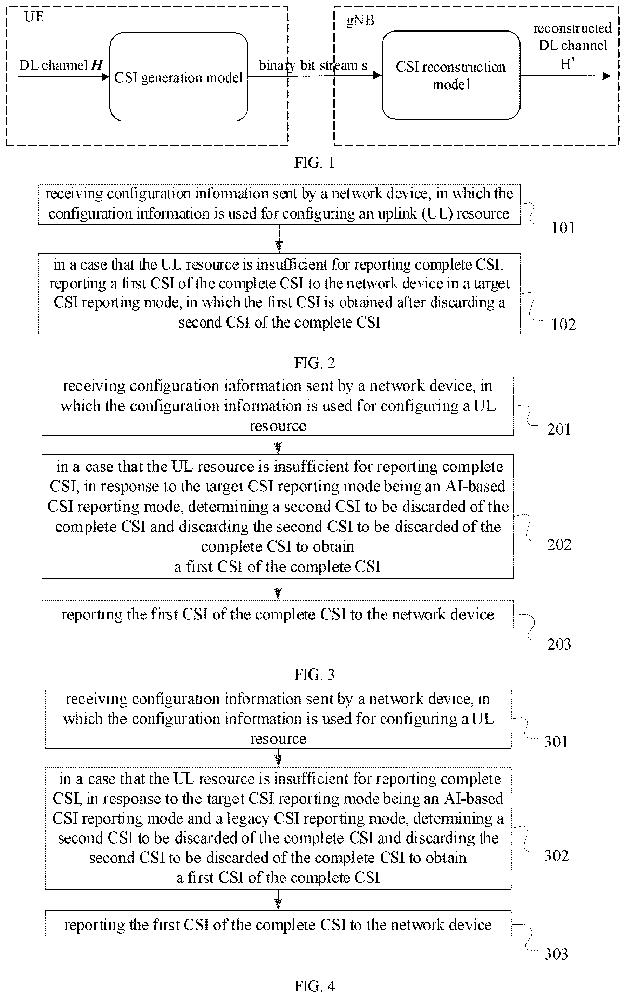

Current research and simulation results indicate that AI technology may be adopted to reduce feedback overhead of a terminal or improve the accuracy of channel state information (CSI) feedback. In the 3rd Generation Partnership Project (3GPP) standardization research, a bilateral AI/machine learning (ML) model has been developed based on a CSI generation model at a UE side and a CSI reconstruction model/model at a network device side, to achieve CSI feedback compression and reconstruction, respectively. FIG. 1 shows a schematic diagram of CSI feedback compression and reconstruction achieved based on a bilateral AI/ML model. The UE sends a binary bit stream to a generation Node B (gNB), in which the binary bit stream is obtained by quantizing after the UE uses the CSI generation model to compress downlink (DL) channel information H. The gNB uses the CSI reconstruction model to reconstruct H', which is approximate to the original downlink information.

When rank >= 1, a method for training the bilateral model having the CSI generation model and the CSI reconstruction model include the following options.

Option 1 (Rank specific): a bilateral model having a CSI generation model and a CSI reconstruction model is trained for each rank.

Option 2 (Rank common): only one bilateral model having a CSI generation model and a CSI reconstruction model is trained for all ranks.

Option 3 (Layer specific): a bilateral model having a CSI generation model and a CSI reconstruction model is trained for each layer.

Option 4 (Layer common): only one bilateral model having a CSI generation model and a CSI reconstruction model is trained for all layers.

For CSI feedback compression based on the bilateral AI/ML model, when the UL resource is insufficient, some information in the AI-based CSI feedback needs to be discarded. However, how to reasonably discard part of CSI information while ensuring certain system performance is an urgent problem that needs to be solved.

To this end, the embodiments propose a method and an apparatus for processing CSI, which may reasonably discard part of CSI information when the UL resource is insufficient and may ensure certain system performance.

It may be understood that the solution according to the present disclosure may be applied to the UE or other executable entities. In the following embodiments of the present disclosure, the technical solution in the present disclosure is explained by taking the execution entity being the UE as an example, which does not constitute a specific limitation. The UE may be a mobile phone, a notebook, a tablet a computer, a POS machine, a vehicle-mounted computer or other communication device, which is not limited in this disclosure.

The method and apparatus for processing CSI in this disclosure are described in detail below with reference to the accompanying drawings.

FIG. 2 shows a flowchart of a method for processing CSI according to an embodiment of the present disclosure. As shown in FIG. 2, the method is applied to a UE and may include the following steps 101-102 in the embodiment.

At 101, configuration information is received from a network device. The configuration information is used for configuring a UL resource.

In a specific application scenario, before the UE reports the CSI to the network device, the network device may send configuration information indicating that there are an UL resource to the UE. Accordingly, in this embodiment of the present disclosure, after receiving the configuration information, the UE may report the CSI to the network device on a UL channel indicated by the UL resource.

At 102, when the UL resource is insufficient for reporting complete CSI, a first CSI of the complete CSI is reported to the network device in a target CSI reporting mode. The first CSI is obtained by discarding a second CSI of the complete CSI.

In a specific application scenario, before using the UL resource to report the CSI to the network device, it may be determined whether the UL resource may support reporting the complete CSI. When it is determined that the UL resource may reporting the complete CSI, the UE may directly use the UL resource to report the complete CSI to the network device. Accordingly, when it is determined that the UL resource is insufficient to support reporting the complete CSI, the UE may discard part of the complete CSI by executing the embodiment of the present disclosure, so that a size of remaining CSIs to be transmitted may is less than or equal to a size of UL resources, and the UL resources are further utilized to report the remaining CSIs to the network device.

The target CSI reporting mode includes an AI-based CSI reporting mode and/or a legacy CSI reporting mode. Different CSI reporting modes may be configured with different CSI omission strategies. The UE may determine a specific target CSI reporting mode to be adopted based on a signaling indication from the network device. Correspondingly, the UE may receive indication information sent by the network device, in which the indication information indicates the target CSI reporting mode. Accordingly, in the embodiments of the present disclosure, when the first CSI of the complete CSI is reported to the network device in the target CSI reporting mode, the first CS of the complete CSI may be reported to the network device based on the legacy CSI reporting mode in a possible implementation; the first CS of the complete CSI may be reported to the network device based on the AI CSI reporting mode in another possible implementation; the first CS of the complete CSI may be reported to the network device simultaneously based on the AI CSI reporting mode and the legacy CSI reporting mode in yet another possible implementation.

When the first CS of the complete CSI is reported to the network device based on the legacy CSI reporting mode, priorities of non-zero coefficients to be reported are mainly ranked, and part of non-zero coefficients are discarded based on a priority ranking result. For CSI feedback with the Rel-16 Type II codebook or the Rel-17 Type II port selection (PS) codebook, the CSI may be reported in two parts: Part 1 and Part 2. The specific contents of the report are shown in Table 1:

Table 1: CSI feedback with the Rel-16 Type II codebook or the Rel-17 Type II PS codebook

| codebook | Part1 | Part2 |
|---|---|---|
| **Rel-16 Type II codebook** | Rank Indication (RI), Channel Quality Indication (CQI) and a number of non-zero coefficients for all layers | • G0: spatial domain (SD) basis vector indication information and strongest coefficient indication information in each polarization direction<br>• G1: frequency domain (FD) basis vector indication information, indication information of a non-zero coefficient with high priority, amplitude and phase quantization information corresponding to non-zero coefficients with high priority except for the strongest coefficient<br>• G2: indication information of a non-zero coefficient with low priority, amplitude and phase quantization information corresponding to the non-zero coefficient with low priority |
| **Rel-17 Type II PS codebook** | | • G0: PS indication information, strongest coefficient indication information, and FD basis vector indication information in each polarization direction<br>• G1: indication information of a non-zero coefficient with high priority, amplitude and phase quantization information corresponding to non-zero coefficients with high priority except for the strongest coefficient<br>• G2: indication information of a non-zero coefficient with low priority, amplitude and phase quantization information corresponding to the non-zero coefficient with low priority |

When the UL resource cannot transmit the complete CSI reporting content, some CSI information needs to be discarded. In order to achieve CSI omission, the information in Part 2 may be divided into G0, G1 and G2 groups. The groups G1 and G2 contain non-zero coefficients with different priorities. The coefficient priority ranking method in combination coefficients based on the Rel-16 Type II codebook or the Rel-17 Type II PS codebook is as follows.

The coefficient priority ranking method for the Rel-16 Type II codebook:

Pri(l, $i,f$) = 2 • $L$ • $v$ • $\pi(f)$ + $v$ • $i$ + $l$, with $\pi(f) = \min\left(2 \cdot n_{3,l}^{(f)}, 2 \cdot \left(N_3 - n_{3,l}^{(f)}\right) - 1\right)$ with $l$ = 1,2, ...,$v$, $i$ = 0,1, ...,2L - 1, and $f$ = 0,1, ...,$M_v$ - 1, where $l$ is a beam, $i$ is a SD beam index, and $f$ is a FD beam index.

The coefficient priority ranking method for the Rel-17 Type II PS codebook:

Pri($l,i,f$) = $K_1$ • $v$ - $f$ + $v$ - $i$ + $l$, with $l$ = 1,2, ...,$v$, $i$ = 0,1,...,$K_1$ - 1 and $f$ = 0, ...,M - 1

The smaller the value of Pri(l, $i$, $f$), the higher the priority. The larger the value of Pri(l, $i$, $f$), the lower the priority.

In the embodiment of the present disclosure, when the first CS of the complete CSI is reported to the network device based on the AI-based CSI reporting mode, priorities of the CSIs are mainly ranked, and part of the CSI (i.e., the second CSI) is discarded based on a priority ranking result. In a possible implementation, when the second CSI to be discarded is determined from the complete CSI, the complete CSI may be reported according to Part 1 and Part 2. That is, the complete CSI may be divided into CSI Part 1 and CSI Part 2. The content included in the CSI Part 1 may be the same as or different from the content included in the CSI Part 1 divided in a legacy manner, which is not specifically limited herein. The CSI Part 2 at least includes a codeword or codeword quantization information. By grouping and determining a priority, the second CSI to be discarded is determined from the codeword or codeword quantization information included in the CSI Part 2, a specific implementation of which may be found in relevant description of the step 202 in the embodiment. In another possible implementation, when the second CSI to be discarded is determined from the complete CSI, the complete CSI may be reported as a whole, that is, the complete CSI are not divided into Part 1 and Part 2 for reporting. By grouping and determining a priority, the second CSI to be discarded is determined from the complete CSI, a specific implementation of which may be found in relevant description of the step 202 in the embodiment. When the first CSI of the complete CSI is reported to the network device together by both the AI-based CSI reporting mode and the legacy CSI reporting mode, a priority of CSI that needs to be reported in the two reporting modes may be ranked, and part of the CSI (i.e., the second CSI) is discarded based on a priority ranking result, a specific implementation of which may be found in relevant description of the step 302 in the embodiment.

In summary, in the method and apparatus for processing CSI according to the embodiments of the present disclosure, when the complete CSI cannot be reported based on the UL resource configured by the network device, the UE may select the second CSI with a lower priority from the complete CSI based on the target CSI reporting mode and discard the second CSI, and further report the remaining first CSI with a higher priority from the complete CSI to the network device. By the technical solution in the present disclosure, it may be achieved that part of the CSI is reasonably discarded and a certain system performance is ensured.

FIG. 3 shows a flowchart of a method for processing CSI according to an embodiment of the present disclosure. As shown in FIG. 3, the method is applied to a UE and may include the following steps 201-203.

At 201, configuration information is received from a network device. The configuration information is used for configuring a UL resource.

For the embodiment of the present disclosure, a specific implementation may be found in relevant description of the step 101 in the embodiment, which will not be repeated here.

At 202, when the UL resource is insufficient for reporting complete CSI, in response to the target CSI reporting mode being the AI-based CSI reporting mode, second CSI to be discarded from the complete CSI is determined, the second CSI of the complete CSI is discarded to obtain the first CSI of the complete CSI.

In the embodiment of the present disclosure, in response to the target CSI reporting mode being the AI-based CSI reporting mode, when determining the second CSI to be discarded from the complete CSI, it may be reported according to Part 1 and Part 2. That is, the complete CSI to be reported is divided into a CSI Part 1 and a CSI Part 2, in which the CSI Part 2 at least includes a codeword or codeword quantization information. Furthermore, by grouping and priority ranking of the codeword or codeword quantization information in the CSI Part 2, the second CSI to be discarded may be determined from the codeword or codeword quantization information.

Accordingly, when the second CSI to be discarded is determined from the codeword or codeword quantization information by grouping and priority ranking of the codeword or codeword quantization information in the CSI Part 2, in a possible implementation, the codeword quantization information may be divided into N groups(i.e., codeword quantization information groups), and the priority of each group is determined according to a group index (the larger the group index, the lower the priority). Then, each codeword quantization information group is sequentially determined as the second CSI to be discarded in an ascending priority order, until a size of the first CSI is less than or equal to a size of the UL resource, where N is greater than or equal to 2.

When the codeword quantization information is divided into N groups:

When a model type of the bilateral model is any one of Layer common, Layer specific, Rank common, and Rank specific, in a possible implementation, codeword quantization information for $\frac{v}{N}$ transmission layers may be placed into first N-1 groups and codeword quantization information for $v - (N - 1)\frac{v}{N}$ transmission layers may be placed into a last group of the N groups, where v is a transmission rank value reported by the UE, and $\frac{v}{N}$ is a value obtained by performing an up or down rounding operation thereon. For example, if N=2, when the codeword quantization information is divided into two groups, codeword quantization information for $\left\lceil \frac{v}{2} \right\rceil$ transmission layers may be placed into a first group and codeword quantization information for other $\left\lfloor \frac{v}{2} \right\rfloor$ transmission layers may be placed into a second group.

When a model type of the bilateral model is any one of Layer common, Layer specific, Rank common, and Rank specific, in a possible implementation, codeword quantization information with a corresponding quantization information length of $\frac{L}{N}$ for each transmission layer may be placed into first N-1 groups, and codeword quantization information with a corresponding quantization information length of $L - (N-1)\frac{L}{N}$ may be placed into a last group of the N groups, where L is a number of codewords output by a CSI generation model for each transmission layer or a quantization information length after codeword quantization, and $\frac{L}{N}$ is a value obtained by performing an up or down rounding operation thereon. For example, if N=2, when the codeword quantization information is divided into two groups, codeword quantization information with a corresponding quantization information length of $\left\lceil \frac{L}{2} \right\rceil$ bits for each transmission layer may be placed into the first group, and codeword quantization information with a quantization information length of $\left\lfloor \frac{L}{2} \right\rfloor$ bits may be placed into the second group.

When a model type of the bilateral model is either Rank common or Rank specific, in a possible implementation, codeword quantization information with a corresponding quantization information length of $\frac{\tilde{X}}{N}$ may be placed into first N-1 groups, and codeword quantization information with a corresponding quantization information length of $X - (N-1)\frac{X}{N}$ may be placed into a last group of the N groups, where X is a number of codewords output by a CSI generation model for each transmission layer or a quantization information length after codeword quantization when a rank is v, and $\frac{X}{N}$ is a value obtained by performing an up or down rounding operation thereon. For example, if N=2, that is, when the codeword quantization information is divided into 2 groups, codeword quantization information with a corresponding quantization information length of $\left\lceil \frac{X}{2} \right\rceil$ for each transmission layer may be placed into the first group, and codeword quantization information with a corresponding quantization information length of $\left\lfloor \frac{X}{2} \right\rfloor$ may be placed into the second group.

Accordingly, by grouping and priority ranking of the codeword quantization information in the CSI Part 2, when the second CSI to be discarded is determined from the codeword quantization information, in a possible implementation, a priority of each codeword or each piece of codeword quantization information corresponding to each transmission layer may be determined, and the codeword or codeword quantization information may be divided into N groups (codeword groups or codeword quantization information groups) in a descending priority order. For example, the higher the priority, the smaller a group index number. Then, a priority of each codeword group or each codeword quantization information group in the N groups is determined according to a group index, and each codeword group or each codeword quantization information group is sequentially determined as the second CSI to be discarded in an ascending priority order, until a size of the first CSI to be transmitted is less than or equal to a size of the UL resource, where N is greater than or equal to 2. For example, a codeword group or codeword quantization information group with the maximum group index number (i.e., the lowest priority) is first determined as a second CSI to be discarded and the second CSI is then discard. Then, it is checked whether the size of the first CSI is less than or equal to the size of the UL resource. If the size of the first CSI is less than or equal to the size of the UL resource, the first CSI is transmitted. If the size of the first CSI is greater than the size of the UL resource, it is continue to determine a codeword group or codeword quantization information group with the second maximum index number (that is, the second lowest priority) as the second CSI to be discarded and discard the second CSI, and so on.

For example, assuming that the AI/ML model for AI-based CSI reporting is Layer common, that is, all layers use the same AI/ML model, then the number of codewords output by the CSI generation model is identical, or a quantization information length L after the codewords are quantized is identical. Assuming that L = 120 bits and the transmission rank selected by the UE is v=2, it is determined based on the transmission layer index or priority calculation formula that, the priority of each codeword or each codeword quantization information corresponding to the first transmission layer is higher than the priority of each codeword or each codeword quantization information corresponding to the second transmission layer. Furthermore, Part 2 corresponding to the first transmission layer and the second transmission layer may be sequentially divided into two groups in a descending priority order. The group corresponding to the first transmission layer includes codeword quantization information with $L_{1,1}$ bits and $L_{2,1}$ bits, and the group corresponding to the second transmission layer includes codeword quantization information with $L_{1,2}$ bits and $L_{2,2}$ bits, in which $L_{1,1}=L_{1,2}=L/2=60$ bits represents first half of the quantization information and second half of the quantization information for the first transmission layer; $L_{2,1}=L_{2,2}=L/2=60$ bits represents first half of the quantization information and second half of the quantization information for the second transmission layer. Furthermore, if priorities of four groups of codeword quantization information groups corresponding to the two transmission layers are determined according to the group index in a descending order: $L_{1,1}$, $L_{2,1}$, $L_{1,2}$, $L_{2,2}$, these codeword quantization information groups may be sequentially determined as the second CSI to be discarded in an ascending priority order ($L_{2,2}$, $L_{1,2}$, $L_{2,1}$, $L_{1,1}$), until the size of the first CSI to be transmitted is less than or equal to the size of the UL resource.

When the priority of each codeword or each codeword quantization information corresponding to each transmission layer is determined, in a possible implementation, the priority of each codeword or each codeword quantization information corresponding to each transmission layer may be determined according to a transmission layer index (the larger the transmission layer index, the lower the priority); in a possible implementation, the priority of each codeword corresponding to each transmission layer may be determined according to a codeword priority calculation formula; in a possible implementation, the priority of each codeword quantization information corresponding to each transmission layer may be determined according to a quantization information priority calculation formula. The codeword priority calculation formula may be $\mathrm{Pri}(l) = \sum_{i=1}^{Y} i * v + l, \ l = 0, \dots, v - 1$, where $Y$ represents a number of codewords included in each transmission layer. The quantization information priority calculation formula may be

$\mathrm{Pri}(l) = \sum_{i=1}^{Y} i * v + l$, where $Y$ represents a length of the quantization information included in each transmission layer.

Exemplarily, the priority of each quantization information is determined according to the defined quantization information priority calculation formula, and the determined priority of each quantization information is shown in Table 2 below. Then, the codeword quantization information with low priority may be sequentially determined as the second CSI to be discarded in a priority order (from right to left), until the size of the first CSI to be transmitted is less than or equal to the size of the UL resource, where Y represents the length of the quantization information.

Table 2: priority ranking of each piece of quantization information for each transmission layer, with priorities decreasing from left to right

| $i_{1,1}$ | $i_{2,1}$ | $i_{1,2}$ | $i_{2,2}$ | $i_{1,3}$ | $\cdots$ | $i_{1,119}$ | $i_{2,119}$ | $i_{1,120}$ | $i_{2,120}$ |
|---|---|---|---|---|---|---|---|---|---|

In the table, $i_{m,n}$ represents the $n^{th}$ piece of codeword quantization information for the $m^{th}$ layer, and a value of $i_{m,n}$ in the table is determined according to Pri($l$).

In the embodiment of the present disclosure, in response to the target CSI reporting mode being the AI-based CSI reporting mode, when the second CSI to be discarded is determined from the complete CSI, the complete CSI may also be reported as a whole, that is, no longer divided into Part 1 and Part 2 for reporting. By grouping and priority ranking of the complete CS, the second CSI to be discarded is determined from the complete CSI.

Accordingly, by grouping and priority ranking of the complete CS, when the second CSI to be discarded is determined from the complete CSI, in a possible implementation, the complete CSI may be divided into N groups (CSI groups), a priority of each group may be determined according to a group index, and each CSI group may be sequentially determined as the second CSI to be discarded in an ascending priority order, until the size of the first CSI is less than or equal to the size of the UL resource, where N is greater than or equal to 2.

When the complete CSI is divided into N groups, codeword quantization information with a corresponding quantization information length of $\frac{L_{tot}}{N}$ may be placed into first N-1 groups and codeword quantization information with a corresponding quantization information length of $L_{tot} - (N-1)\frac{L_{tot}}{N}$ may be placed into a last group of the N groups, where $L_{tot}$ is a total information length of the complete CSI, and $\frac{L_{tot}}{N}$ is a value obtained by performing an up or down rounding operation thereon.

Accordingly, by grouping and priority ranking of the complete CS, when the second CSI to be discarded is determined from the complete CSI, in a possible implementation, codeword quantization information included in the complete CSI may be divided into N groups (of codeword quantization information), a priority of each group is determined according to a group index, and each codeword quantization information group is sequentially determined as the second CSI to be discarded in an ascending priority order, until the size of the first CSI is less than or equal to the size of the UL resource, where N is greater than or equal to 2.

When the codeword quantization information included in the complete CSI is divided into N groups,

in a possible implementation, in the complete CSI, codeword quantization information for $\frac{v}{N}$ transmission layers may be placed into first N-1 groups, and codeword quantization information for $v$ - $(N-1)\frac{v}{N}$ transmission layers may be placed into a last group of the N groups, where v is a transmission rank value reported by the UE, and $\frac{v}{N}$ is a value obtained by performing an up or down rounding operation thereon;

in a possible implementation, in the complete CSI and for each transmission layer, codeword quantization information with a corresponding quantization information length of $\frac{L}{N}$ may be placed into first N-1 groups, and codeword quantization information with a corresponding quantization information length of $L-(N-1)\frac{L}{N}$ may be placed into a last group of the N groups, where $L$ is a number of codewords output by a CSI generation model for each transmission layer or a quantization information length after codeword quantization, and $\frac{L}{N}$ is a value obtained by performing an up or down rounding operation thereon;

in a possible implementation, in the complete CSI and for each transmission layer, codeword quantization information with a corresponding quantization information length of $\frac{X}{N}$ may be placed into first N-1 groups, and codeword quantization information with a corresponding quantization information length of $X-(N-1)\frac{X}{N}$ may be placed into a last group of the N groups, where X is a number of codewords output by a CSI generation model for each transmission layer or a quantization information length after codeword quantization when a rank is *v*, and $\frac{X}{N}$ is a value obtained by performing an up or down rounding operation thereon.

At 202, the first CSI of the complete CSI is reported to the network device.

In a specific application scenario, when the first CSI of the complete CSI is reported to the network device, the target CSI reporting mode may be used to report input information Input-CSI-NW of the CSI generation model to the network device. Input-CSI-NW represents input information of the AI/ML model for CSI generation at a UE side. If contents in the CSI report also include Input-CSI-NW, the Input-CSI-NW may be reported in the same CSI as the AI-based CSI report and the legacy CSI report. When one CSI is reported, the reported Input-CSI-NW includes a part that is independent of the above parts and is reported separately.

In summary, in the method and apparatus for processing CSI according to the embodiments of the present disclosure, when the complete CSI cannot be reported based on the UL resource configured by the network device, the UE may select the second CSI with a lower priority from the complete CSI based on the target CSI reporting mode and discard the second CSI, and further report the remaining first CSI with a higher priority from the complete CSI to the network device. The technical solution in the present disclosure may reasonably discard part of the CSI information and may ensure certain system performance by grouping and priority ranking.

FIG. 4 shows a flowchart of a method for processing CSI according to an embodiment of the present disclosure. As shown in FIG. 4, the method is applied to a UE and may include the following steps 3301-303.

At 301, configuration information is received from a network device. The configuration information is used for configuring a UL resource.

In the embodiment of the present disclosure, the specific implementation may be found in the relevant description of the step 101 of the embodiment, which will not be repeated here.

At 302, when the UL resource is insufficient for reporting complete CSI, in response to the target CSI reporting mode being the AI-based CSI reporting mode and the legacy CSI reporting mode, second CSI to be discarded from the complete CSI is determined, the second CSI of the complete CSI is discarded to obtain the first CSI of the complete CSI.

In this embodiment of the present disclosure, in response to the target CSI reporting mode being the AI-based CSI reporting mode and the legacy CSI reporting mode, when the second CSI to be discarded is determined from the complete CSI, a third CSI that needs to be reported in the AI-based CSI reporting mode and a fourth CSI that needs to be reported in the legacy CSI reporting mode may be first determined; and the second CSI may be further determined from the third CSI and the fourth CSI. When the second CSI is determined from the third CSI and the fourth CSI, in a possible implementation, the fourth CSI that needs to be reported in the legacy CSI reporting mode may be directly determined as the second CSI to be discarded; in a possible implementation, a CSI Part 2 corresponding to the third CSI and a CSI Part 2 corresponding to the fourth CSI may be combined and the second CSI may be determined from a combined CSI Part 2. That is, reporting is performed according to Part 1 and Part 2, the complete CSI needed to be reported in the two reporting modes may be divided into the CSI Part 1 and the CSI Part 2. Further, the second CSI to be discarded may be determined from the CSI included in the CSI Part 2 by grouping and priority ranking. Specifically, when the second CSI to be discarded is determined from the CSI included in the CSI Part2 by group division and priority determination, the combined CSI Part 2 may be divided into N groups, a priority of each group may be determined according to a group index, and each CSI Part2 group may be sequentially determined as the second CSI to be discarded in an ascending priority order, until the size of the first CSI to be transmitted is less than or equal to the size of the UL resource, where N is greater than or equal to 2.

When the third CSI and the fourth CSI are combined and the complete CSI needed to be reported in the two reporting modes are divided into the CSI Part 1 and the CSI Part 2, the CSI Part 1 may include RI/CQI, a number of codewords for each transmission layer or a number of codewords for all transmission layers, and a number of non-zero coefficients for all transmission layers. When the CSI Part 1 is reported to the network device, information on the number of codewords for each transmission layer or the number of codewords for all transmission layers in the CSI Part 1 may be reported in the AI-based CSI reporting mode, the number of non-zero coefficients for all transmission layers in the CSI Part 1 may be reported in the legacy CSI reporting mode, and the RI/CQI in the Part 1 may be reported to the network device in the AI-based CSI reporting mode or the legacy CSI reporting mode. It needs to be noted that the RI/CQI is reported only once and may be calculated based on AI-based CSI or legacy CSI. Specifically, whether RI/CQI calculation is performed according to AI-based CSI reporting or legacy CSI reporting is determined by a pre-defined manner, network configuring, or terminal indicating.

As shown in Table 1, reporting information of the CSI Part 2 corresponding to the fourth CSI may be divided into G0, G1, and G2 groups. When reporting information of the CSI Part 2 corresponding to the third CSI and reporting information of the CSI Part 2 corresponding to the fourth CSI are combined, in a possible implementation, each group of codeword quantization information in the CSI Part 2 corresponding to the third CSI may be configured before G0 group information of the CSI Part 2 corresponding to the fourth CSI or after G2 group information of the CSI Part 2 corresponding to the fourth CSI. For example, the CSI Part 2 corresponding to the third CSI includes two groups of codeword quantization information A1 and A2, each group of codeword quantization information in the CSI Part 2 corresponding to the third CSI may be configured before G0 group information of the CSI Part 2 corresponding to the fourth CSI respectively, to obtain reporting information "A1, A2, G0, G1, G2" of the CSI Part 2; alternatively, each group of codeword quantization information in the CSI Part 2 corresponding to the third CSI may be configured after G2 group information of the CSI Part 2 corresponding to the third CSI respectively, to obtain reporting information "G0, G1, G2, A1, A2" of the combined CSI Part 2. When reporting information of the CSI Part 2 corresponding to the third CSI and reporting information of the CSI Part 2 corresponding to the fourth CSI are combined, in a possible implementation, each group of codeword quantization information in the CSI Part 2 corresponding to the third CSI may be inserted into different group information of the CSI Part 2 corresponding to the fourth CSI, respectively. When information in the AI-based CSI reporting is divided into two groups, these two groups of information are respectively included in two of the groups in the Part 2 for legacy CSI reporting. Alternatively, when information in the AI-based CSI reporting is divided into three groups, these two groups of information are respectively included in the three groups of Part 2 for legacy CSI reporting. For example, the CSI Part 2 corresponding to the third CSI includes two groups of codeword quantization information B1 and B2. The B1 may be inserted into the G0 group information and the B2 may be inserted into the G1 group information, or the B1 may be inserted into the G0 group information and the B2 may be inserted into the G2 group information, etc. For another example, the CSI Part 2 corresponding to the third CSI includes three groups of codeword quantization information B1, B2, and B3. The B1 may be inserted into the G0 group information, the B2 may be inserted into the G1 group information and the B3 may be inserted into the G2 group information, or the B1 may be inserted into the G1 group information, the B2 may be inserted into the G0 group information and the B3 may be inserted into the G2 group information, etc.

For example, it is assumed that Part 1 and Part 2 are included in one CSI report through which AI-based CSI reporting and legacy CSI reporting are performed. The information in Part 1 is shown in Table 3 below:

Table 3: CSI information included in Part 1

| Part1 | RI | CQI | a number of non-zero coefficients transmitted for all lavers | a length of quantization information output by the CSI generation model for each layer |
|---|---|---|---|---|

Assuming that the transmission rank indicated by RI is 2, a legacy CSI feedback is performed based on the Rel-16 Type II codebook. Assuming that a length L of quantization information output by the CSI generation model for each layer is 120 bits, three groups of quantization information are divided for each layer, each group contains quantization information with 40 bits. When three groups of quantization information are divided for AI-based CSI reporting, the three groups of information are included in Part 2 for legacy CSI reporting, as shown in Table 4 below.

Table 4: CSI information included in Part 1

| Part2 | • G0: SD basis vector indication information and strongest coefficient indication information in each polarization direction<br>• first 40 bits for the first and second layers | • G1: FD basis vector indication information, indication information of a non-zero coefficient with high priority, amplitude and phase quantization information corresponding to non-zero coefficients with high priority except for the strongest coefficient<br>• middle 40 bits for the first and second layers | • G2: indication information of a non-zero coefficient with low priority, amplitude and phase quantization information corresponding to the non-zero coefficient with low priority<br>• last 40 bits for the first and second layers |
| --- | --- | --- | --- |

In this embodiment of the present disclosure, in response to the target CSI reporting mode being the AI-based CSI reporting mode and the legacy CSI reporting mode, the complete CSI needed to be reported in the two reporting modes may also be reported as a whole, that is, no longer divided into Part 1 and Part 2. In a possible implementation, the CSI report may be divided into three parts: a CSI Part 1, a CSI Part 2, and a CSI Part 3, in which the CSI Part 1 is used to report contents (such as the RI, CQI, and number of non-zero coefficients for all layers) of Part 1 in the legacy CSI (fourth CSI) reporting mode, the CSI Part 3 is used to report contents (such as G0, G1, and G2 group information) of Part 2 in the legacy CSI (fourth CSI) reporting mode, and the CSI Part 2 is used to report contents in the AI-based CSI (third CSI) reporting mode. When the second CSI to be discarded is determined from the complete CSI, non-zero coefficients in the CSI Part 3 that do not comply with UL resource transmission may be determined as the second CSI. Specifically, priorities of the non-zero coefficients that need to be reported may be ranked, and part of non-zero coefficients may be discarded based on a priority ranking result, so that the size of the remaining first CSI is less than or equal to the size of the UL resource.

In a possible implementation, the CSI report may be divided into three parts: a CSI Part 1, a CSI Part 2, and a CSI Part 3, in which the CSI Part 1 is used to report contents (such as the RI, CQI, and number of non-zero coefficients for all layers) of Part 1 in the legacy CSI (fourth CSI) reporting mode, the CSI Part 2 is used to report contents (such as the G0, G1, and G2 group information) of Part 2 in the legacy CSI (fourth CSI) reporting mode, and the CSI Part 3 is used to report the third CSI. The CSI Part 3 at least includes a codeword or codeword quantization information. Furthermore, the codeword quantization information in the CSI Part 3 may be divided into N groups (codeword quantization information groups), and a priority of each group is determined according to a group index. Each codeword quantization information group is sequentially determined as the second CSI to be discarded in an ascending priority order, until a size of the first CSI is less than or equal to a size of the UL resource, where N is greater than or equal to 2: alternatively, a priority of each codeword or each codeword quantization information corresponding to each transmission layer may be determined, and the codeword or codeword quantization information may be divided into N groups (codeword groups or codeword quantization information groups) in an ascending priority order (for example, the higher the priority, the smaller the group index number); then a priority of each group is determined according to a group index, and each codeword group or codeword quantization information group is sequentially determined as the second CSI to be discarded in an ascending priority order, until the size of the first CSI is less than or equal to the size of the UL resource, where N is greater than or equal to 2.

When the codeword quantization information is divided into N groups:

In a possible implementation, codeword quantization information for $\frac{v}{N}$ transmission layers may be placed into first N-1 groups and codeword quantization information for $v - (N-1)\frac{v}{N}$ transmission layers may be placed into a last group of the N groups, where v is a transmission rank value reported by the UE, and $\frac{v}{N}$ is a value obtained by performing an up or down rounding operation thereon. For example, if N=2, when the codeword quantization information is divided into two groups, codeword quantization information for $\left\lceil \frac{v}{2} \right\rceil$ transmission layers may be placed into a first group and codeword quantization information for other $\left\lfloor \frac{v}{2} \right\rfloor$ transmission layers may be placed into a second group.

In a possible implementation, codeword quantization information with a corresponding quantization information length of $\frac{L}{N}$ for each transmission layer may be placed into first N-1 groups, and codeword quantization information with a corresponding quantization information length of $L - (N-1)\frac{L}{N}$ may be placed into a last group of the N groups, where $L$ is a number of codewords output by a CSI generation model for each transmission layer or a quantization information length after codeword quantization, and $\frac{L}{N}$ is a value obtained by performing an up or down rounding operation thereon. For example, if N=2, when the codeword quantization information is divided into two groups, codeword quantization information with a corresponding quantization information length of $\left\lceil \frac{L}{2} \right\rceil$ bits for each transmission layer may be placed into the first group, and codeword quantization information with a quantization information length of $\left\lfloor \frac{L}{2} \right\rfloor$ bits may be placed into the second group.

In a possible implementation, codeword quantization information with a corresponding quantization information length of $\frac{X}{N}$ may be placed into first N-1 groups, and codeword quantization information with a corresponding quantization information length of $X - (N-1)\frac{X}{N}$ may be placed into a last group of the N groups, where X is a number of codewords output by a CSI generation model for each transmission layer or a quantization information length after codeword quantization when a rank is $v$, and $\frac{X}{N}$ is a value obtained by performing an up or down rounding operation thereon. For example, if N=2, that is, when the codeword quantization information is divided into 2 groups, codeword quantization information with a corresponding quantization information length of $\left\lceil \frac{X}{2} \right\rceil$ for each transmission layer may be placed into the first group, and codeword quantization information with a corresponding quantization infonnation length of $\left\lfloor \frac{X}{2} \right\rfloor$ may be placed into the second group.

When the priority of each codeword or each codeword quantization information corresponding to each transmission layer is determined, in a possible implementation, the priority of each codeword or each codeword quantization information corresponding to each transmission layer may be determined according to a transmission layer index (the larger the transmission layer index, the lower the priority); in a possible implementation, the priority of each codeword corresponding to each transmission layer may be determined according to a codeword priority calculation formula; in a possible implementation, the priority of each codeword quantization information corresponding to each transmission layer may be determined according to a quantization information priority calculation formula. The codeword priority calculation formula may be $\mathrm{Pri}(l) = \sum_{i=1}^{Y} i * v + l$, $l = 0, ..., v - 1$, where $Y$ represents a number of codewords included in each transmission layer. The quantization information priority calculation formula may be $\mathrm{Pri}(l) = \sum_{i=1}^{Y} i * v + l$, where $Y$ represents a length of the quantization information included in each transmission layer.

At 303, the first CSI of the complete CSI is reported to the network device.

Reference of the specific implementation of the embodiment of the present disclosure may be made to the relevant description in the step 202 of the embodiment, which will not be repeated here.

In summary, in the method and apparatus for processing CSI according to the embodiments of the present disclosure, when the complete CSI cannot be reported based on the UL resource configured by the network device, the UE may select the second CSI with a lower priority from the complete CSI based on the target CSI reporting mode and discard the second CSI, and further report the remaining first CSI with a higher priority from the complete CSI to the network device. The technical solution in the present disclosure may reasonably discard part of the CSI information and may ensure certain system performance by grouping and priority ranking.

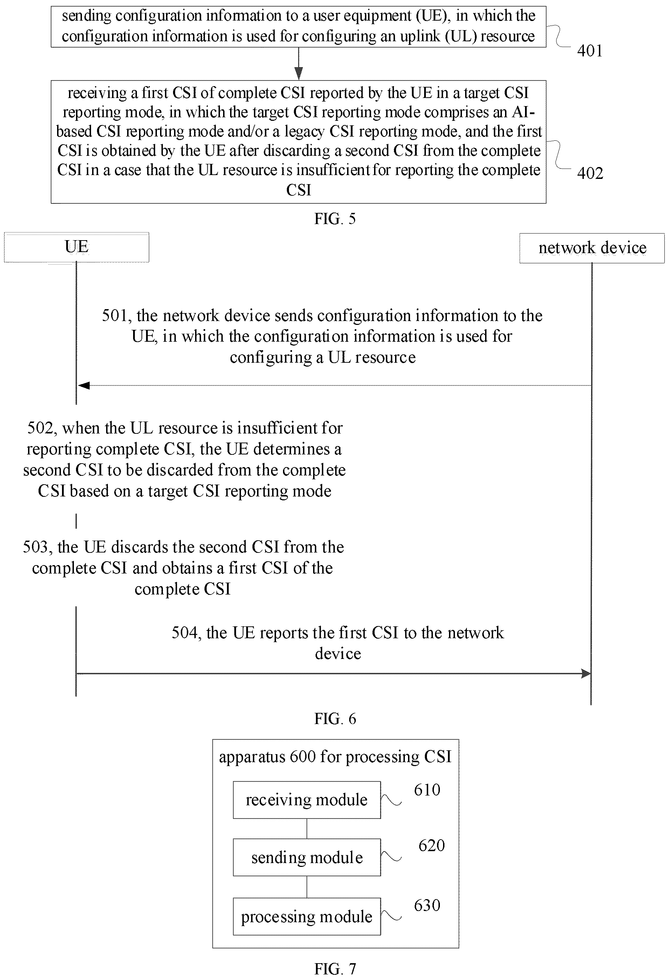

FIG. 5 shows a flowchart of a method for processing CSI according to an embodiment of the present disclosure. As shown in FIG. 5, the method is applied to a network device, which may be a base station, etc., and is not specifically limited here. The method may include the following steps 401-402.

At 401, configuration information is sent to the UE. The configuration information is used for configuring a UL resource.

According to the embodiment of the present disclosure, in order to enable the UE to report CSI to the network device, the network device may send configuration information indicating that there is a UL resource to the UE. After receiving the configuration information, the UE may report the CSI to the network device via a UL channel indicated by the UL resource.

At 402, it is received that a first CSI of the complete CSI reported by the UE in a target CSI reporting mode, in which the target CSI reporting mode includes an AI-based CSI reporting mode and/or a legacy CSI reporting mode. The first CSI is obtained by the UE after discarding a second CSI from the complete CSI in a case that the UL resource is insufficient for reporting the complete CSI.

In a specific application scenario, after the network device sends configuration information to the UE, the UE may determine whether the UL resource may support reporting of the complete CSI before using the UL resource to report CSI to the network device. In a possible application scenario, when the UE determines that the UL resource may support reporting of the complete CSI, the UE may directly use the UL resource to report the complete CSI to the network device. Accordingly, the network device may receive the complete CSI reported by the UE. In a possible application scenario, when the UE determines that the UL resource is insufficient to support reporting of the complete CSI, part of the CSI may be discarded from the complete CSI, so that the size of the remaining CSI to be transmitted may be less than or equal to the size of the UL resource. Furthermore, the UL resource is used to report the remaining CSI to the network device. Accordingly, the network device may receive the first CSI of the complete CSI reported by the UE, in which the first CSI is obtained by the UE after discarding the second CSI from the complete CSI when the UL resource is insufficient for reporting the complete CSI.

The target CSI reporting mode includes an AI-based CSI reporting mode and/or a legacy CSI reporting mode. Different CSI reporting modes may be configured with different CSI omission strategies. The UE may determine a specific target CSI reporting mode to be adopted based on a signaling indication from the network device. Correspondingly, the network device may send indication information to the UE, in which the indication information indicates the target CSI reporting mode. Accordingly, in the embodiments of the present disclosure, when the first CSI of the complete CSI reported by the UE in the target CSI reporting mode is received, the first CSI reported by the UE based on the legacy CSI reporting mode may be received in a possible implementation: the first CS reported by the UE based on the AI CSI reporting mode may be received in another possible implementation; the first CS reported by the UE based on the AI CSI reporting mode and the legacy CSI reporting mode may be received in yet another possible implementation. It needs to be noted that when the UL resource cannot be used to report the complete CSI, reference of the specific implementation of determining by the UE the second CSI based on the target CSI reporting mode and discarding the second CSI may be made to the relevant descriptions of the steps 102, 202, and 302 in the embodiments, which will not be repeated here.

In a specific application scenario, when the first CSI of the complete CSI is reported to the network device, the UE may also use the target CSI reporting mode to report input information Input-CSI-NW of the CSI generation model to the network device. Input-CSI-NW represents input information of the AI/ML model for CSI generation at a UE side. If contents in the CSI report also include Input-CSI-NW, the Input-CSI-NW may be reported in the same CSI as the AI-based CSI report and the legacy CSI report. When one CSI is reported, the reported Input-CSI-NW includes a part that is independent of the above parts and is reported separately. Correspondingly, in this embodiment of the present disclosure, the network device may also receive input information Input-CSI-NW of the CSI generation model reported by the UE in the target CSI reporting mode.

In summary, according to the channel state information CSI processing method and device according to the embodiments of the present invention, when the UE is unable to report all the channel state information CSI based on the UL resource configured by the network device, it may select the second CSI with a lower priority from the complete CSI based on the target CSI reporting mode and discard it, and further report the remaining first CSI with a higher priority from the complete CSI to the network device. The technical solution disclosed in the present invention may reasonably discard part of the CSI information through grouping and priority ranking, and may ensure certain system performance.

FIG. 6 is a timing diagram illustrating a method for processing CSI according to an embodiment of the present disclosure. The method is applied to a communication system, which includes a UE and a network device. The network device sends configuration information to the UE, in which the configuration information is used for configuring a UL resource. When the UL resource cannot be used to report the complete CSI, the UE determines a second CSI to be discarded from the complete CSI based on the target CSI reporting mode. The UE discards the second CSI from the complete CSI and obtains the first CSI of the complete CSI. The UE reports the first CSI of the complete CSI to the network device.

At 501, the network device sends configuration information to the UE, in which the configuration information is used for configuring a UL resource.

In this embodiment of the present disclosure, in order to enable the UE to report CSI to the network device, the network device may send configuration information indicating that there is the UL resource to the UE. After receiving the configuration information, the UE may report the CSI to the network device via a UL channel indicated by the UL resource.

At 502, when the UL resource is insufficient for reporting complete CSI, the UE determines a second CSI to be discarded from the complete CSI based on a target CSI reporting mode.

At 503, the UE discards the second CSI from the complete CSI and obtains a first CSI of the complete CSI.

Reference of the specific implementation of the steps 502 and 503 in the embodiments may be made to the relevant descriptions of the steps 102, 202, and 302 in the embodiments, which will not be repeated here.

At 504, the UE reports the first CSI to the network device.

In summary, in the method and apparatus for processing CSI according to the embodiments of the present disclosure, when the complete CSI cannot be reported based on the UL resource configured by the network device, the UE may select the second CSI with a lower priority from the complete CSI based on the target CSI reporting mode and discard the second CSI, and further report the remaining first CSI with a higher priority from the complete CSI to the network device. The technical solution in the present disclosure may reasonably discard part of the CSI information and may ensure certain system performance by grouping and priority ranking.

In the above embodiments provided in the present disclosure, the methods provided in the embodiments of the present disclosure are introduced from the perspectives of the UE and the network device respectively. In order to implement various functions of the method provided in the above embodiments of the present disclosure, the UE and the network device may include a hardware structure and a software module, to implement the above functions in the form of the hardware structure, the software module, or the hardware structure plus the software module. Any of the above functions may be implemented in the form of the hardware structure, the software module, or a combination of the hardware structure and the software module.

Corresponding to the method for processing CSI provided in the above-mentioned embodiments, the present disclosure also provides an apparatus for processing CSI. Since the apparatus for processing CSI provided in the embodiment of the present disclosure corresponds to the method for processing CSI provided in the above-mentioned embodiments, the implementation of the method for processing CSI is also applicable to the apparatus for processing CSI provided in this embodiment, which will not be repeated here.

FIG. 7 is a block diagram illustrating an apparatus 600 for processing CSI according to an embodiment of the disclosure. The apparatus 600 may be applied to a UE.

As shown in FIG. 7, the apparatus 600 may include a receiving module 610 and a sending module 620.

The receiving module 610 may be configured to receive configuration information sent by a network device, in which the configuration information is used to configure for a UL resource.

The sending module 620 may be configured to report a first CSI of the complete CSI to the network device in a target CSI reporting mode in a case that the UL resource is insufficient for reporting the complete CSI. The target CSI reporting mode includes an AI-based CSI reporting mode and/or a legacy CSI reporting mode. The first CSI is obtained by discarding a second CSI of the complete CSI.

In some embodiments of the present disclosure, as shown in FIG. 7, the apparatus 600 may further include a processing module 630.

The processing module 630 may be configured to determine the second CSI to be discarded of the complete CSI based on the target CSI reporting mode.

In some embodiments of the present disclosure, when the target CSI reporting mode is the AI-based CSI reporting mode, the processing module 630 may be configured to divide the complete CSI into a CSI Part 1 and a CSI Part 2, in which the CSI Part 2 at least includes a codeword or codeword quantization information; divide the codeword quantization information into N groups, determine a priority of each group according to a group index, and sequentially determine each codeword quantization information group as the second CSI to be discarded in an ascending priority order, until a size of the first CSI is less than or equal to a size of the UL resource, where N is greater than or equal to 2; or determine a priority of each codeword or each piece of codeword quantization information corresponding to each transmission layer, divide the codeword or codeword quantization information into N groups in a descending priority order, determine a priority of each group according to a group index, and sequentially determine each codeword group or each codeword quantization information group as the second CSI to be discarded in the ascending priority order, until a size of the first CSI is less than or equal to a size of the UL resource, where N is greater than or equal to 2.

In some embodiments of the present disclosure, when the target CSI reporting mode is the AI-based CSI reporting mode, the processing module 630 may be configured to divide the complete CSI into N groups, determine a priority of each group according to a group index, and sequentially determine each CSI group as the second CSI to be discarded in an ascending priority order, until a size of the first CSI is less than or equal to a size of the UL resource, where N is greater than or equal to 2; or divide codeword quantization information included in the complete CSI into N groups, determine a priority of each group according to a group index, and sequentially determine each codeword quantization information group as the second CSI to be discarded in an ascending priority order, until a size of the first CSI is less than or equal to the size of the uplink resource, where N is greater than or equal to 2.

In some embodiments of the present disclosure, when the complete CSI is divided into N groups, the processing module 630 may be configured to place, in the complete CSI, codeword quantization information with a corresponding quantization information length of $\frac{L_{tot}}{N}$ into first N-1 groups, and codeword quantization information with a corresponding quantization information length of $L_{tot} - (N-1)\frac{L_{tot}}{N}$ into a last group of the N groups, where $L_{tot}$ is a total information length of the complete CSI, and $\frac{L_{tot}}{N}$ is a value obtained by performing an up or down rounding operation thereon.

In some embodiments of the present disclosure, when the codeword quantization information included in the complete CSI is divided into N groups, the processing module 630 may be configured to place, in the complete CSI, codeword quantization information for $\frac{v}{N}$ transmission layers into first N-1 groups, and codeword quantization information for $v - (N-1)\frac{v}{N}$ transmission layers into a last group of the N groups, where v is a transmission rank value reported by the UE, and $\frac{v}{N}$ is a value obtained by performing an up or down rounding operation thereon; or place, in the complete CSI and for each transmission layer, codeword quantization information with a corresponding quantization information length of $\frac{L}{N}$ into first N-1 groups, and codeword quantization information with a corresponding quantization information length of $L - (N-1)\frac{L}{N}$ into a last group of the N groups, where $L$ is a number of codewords output by a CSI generation model for each transmission layer or a quantization information length after codeword quantization, and $\frac{L}{N}$ is a value obtained by performing an up or down rounding operation thereon; or place, in the complete CSI and for each transmission layer, codeword quantization information with a corresponding quantization information length of $\frac{X}{N}$ into first N-1 groups, and codeword quantization information with a corresponding quantization information length of $X - (N-1)\frac{X}{N}$ into a last group of the N groups, where X is a number of codewords output by a CSI generation model for each transmission layer or a quantization information length after codeword quantization when a rank is v, and $\frac{X}{N}$ is a value obtained by performing an up or down rounding operation thereon.

In some embodiments of the present disclosure, when the target CSI reporting mode is the AI-based CSI reporting mode and the legacy CSI reporting mode, the processing module 630 may be configured to determine a third CSI that needs to be reported in the AI-based CSI reporting mode and a fourth CSI that needs to be reported in the legacy CSI reporting mode; and determine the second CSI from the third CSI and the fourth CSI.

In some embodiments of the present disclosure, the processing module 630 may be configured to determine the fourth CSI as the second CSI; or to combine a CSI Part 2 corresponding to the third CSI and a CSI Part 2 corresponding to the fourth CSI, and determine the second CSI from a combined CSI Part 2.

In some embodiments of the present disclosure, the processing module 630 may be configured to configure each group of codeword quantization information in the CSI Part 2 corresponding to the third CSI before G0 group information of the CSI Part 2 corresponding to the fourth CSI or after G2 group information of the CSI Part 2 corresponding to the fourth CSI; or insert each group of codeword quantization information in the CSI Part 2 corresponding to the third CSI into different group information of the CSI Part 2 corresponding to the fourth CSI, respectively.

In some embodiments of the present disclosure, the processing module 630 may be configured to divide the combined CSI Part 2 into N groups, determine a priority of each group according to a group index, and sequentially determine each CSI Part 2 group as the second CSI to be discarded in an ascending priority order, until a size of the first CSI is less than or equal to a size of the UL resource, where N is greater than or equal to 2.

In some embodiments of the present disclosure, the processing module 630 may be configured to divide the complete CSI into a CSI Part 1, a CSI Part 2 and a CSI Part 3, in which the CSI Part 1 and the CSI Part 3 are used to report the fourth CSI, and the CSI Part 2 is used to report the third CSI; and determine a non-zero coefficient in the CSI Part 3 that does not meet UL resource transmission as the second CSI.

In some embodiments of the present disclosure, the processing module 630 may be configured to determine the second CSI from the third CSI and the fourth CSI, including: dividing the complete CSI into a CSI Part 1, a CSI Part 2, and a CSI Part 3, in which the CSI Part 1 and the CSI Part 2 are used to report the fourth CSI, the CSI Part 3 is used to report the third CSI, and the CSI Part 3 at least includes a codeword or codeword quantization information; dividing the codeword quantization information into N groups, determining a priority of each group according to a group index, and sequentially determining each codeword quantization information group as the second CSI to be discarded in an ascending priority order, until a size of the first CSI is less than or equal to a size of the UL resource, where N is greater than or equal to 2; or

determining a priority of each codeword or each piece of codeword quantization information corresponding to each transmission layer, dividing the codeword or codeword quantization information into N groups in a descending priority order, determining a priority of each group according to a group index, and sequentially determining each codeword group or each codeword quantization information group as the second CSI to be discarded in the ascending priority order, until a size of the first CSI is less than or equal to a size of the UL resource, where N is greater than or equal to 2.

In some embodiments of the present disclosure, the processing module 630 may be configured to place codeword quantization information for $\frac{v}{N}$ transmission layers into first N-1 groups, and codeword quantization information for $v - (N-1)\frac{v}{N}$ transmission layers into a last group of the N groups, where $v$ is a transmission rank value reported by the UE, and $\frac{v}{N}$ is a value obtained by performing an up or down rounding operation thereon; or place, for each transmission layer, codeword quantization information with a corresponding quantization information length of $\frac{L}{N}$ into first N-1 groups, and codeword quantization information with a quantization information length of $L - (N-1)\frac{L}{N}$ into a last group of the N groups, where L is a number of codewords output by a CSI generation model for each transmission layer or a quantization information length after codeword quantization, and $\frac{L}{N}$ is a value obtained by performing an up or down rounding operation thereon; or place, for each transmission layer, codeword quantization information with a corresponding quantization information length of $\frac{X}{N}$ into first N-1 groups, and codeword quantization information with a corresponding quantization information length of $X - (N-1)\frac{X}{N}$ into a last group of the N groups, where X is a number of codewords output by a CSI generation model for each transmission layer or a quantization information length after codeword quantization when a rank is $v$, and $\frac{X}{N}$ is a value obtained by performing an up or down rounding operation thereon.

In some embodiments of the present disclosure, the processing module 630 may be configured to determine the priority of each codeword or each codeword quantization information corresponding to each transmission layer according to a transmission layer index: or determine the priority of each codeword corresponding to each transmission layer according to a codeword priority calculation formula; or determine the priority of each codeword quantization information corresponding to each transmission layer according to a quantization information priority calculation formula.

In some embodiments of the present disclosure, the receiving module 610 may be configured to receive indication information sent by the network device, in which the indication information indicates the target CSI reporting mode.

In some embodiments of the present disclosure, the sending module 620 may be configured to report input information Input-CSI-NW of a CSI generation model to the network device in the target CSI reporting mode.

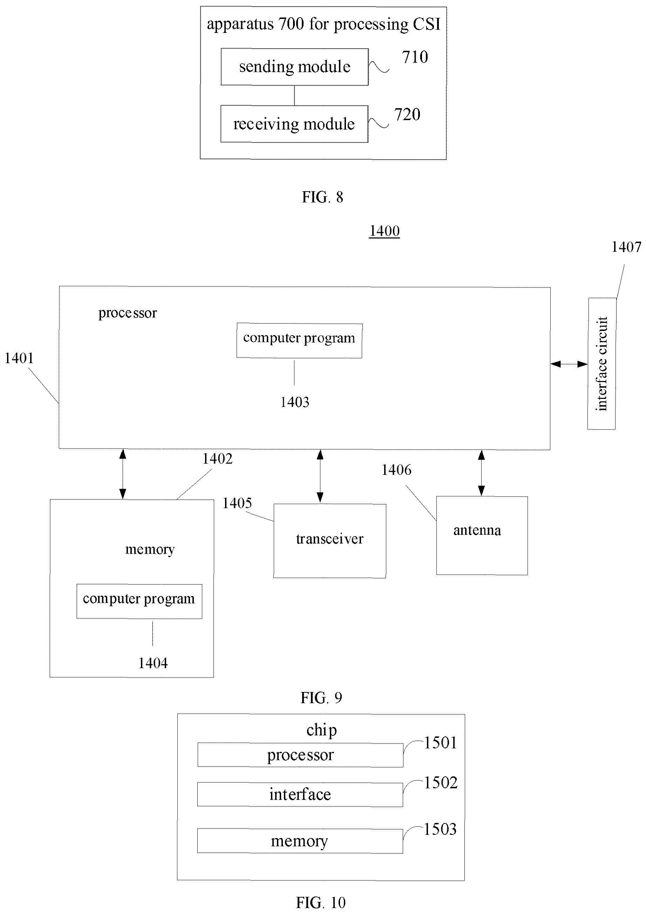

FIG. 8 is a block diagram illustrating an apparatus 700 for processing CSI according to an embodiment of the disclosure. The apparatus 700 may be applied to a network device.

As shown in FIG. 8, the apparatus 700 may include a sending module 710 and a receiving module 720.

The sending module 710 may be configured to send configuration information to a UE, in which the configuration information is used for configuring a UL resource.

The receiving module 720 may be configured to receive a first CSI of the complete CSI reported by the UE in a target CSI reporting mode, in which the target CSI reporting mode includes an AI-based CSI reporting mode and/or a legacy CSI reporting mode. The first CSI is obtained by the UE after discarding a second CSI from the complete CSI in a case that the UL resource is insufficient for reporting the complete CSI.

In some embodiments of the present disclosure, the sending module 710 may be configured to send indication information to the UE, in which the indication information indicates the target CSI reporting mode.

In some embodiments of the present disclosure, the receiving module 720 may be configured to receive input information Input-CSI-NW of a CSI generation model reported by the UE using in the target CSI reporting mode.

With reference to FIG. 9, it is a structural diagram of another communication device 1400 according to an embodiment of the present disclosure. The communication device 1400 may be a network device, a UE, a chip, a chip system, or a processor that supports the network device to implement the above method, or a chip, a chip system, or a processor that supports the UE to implement the above method. The device may be used to implement the method described in the above method embodiments. For details, reference may be made to the description in the above method embodiments.

The communication device 1400 may include one or more processors 1401. The processor 1401 may be a general-purpose processor or a dedicated processor. For example, it may be a baseband processor or a central processing unit. The baseband processor may be used to process communication protocols and communication data, and the central processing unit may be used to control communication devices (such as a base station, a baseband chip, a terminal, a terminal device chip, a DU or a CU, etc.), execute computer programs, and process data of the computer programs.

Optionally, the communication device 1400 may further include one or more memories 1402, on which a computer program 1404 may be stored. When the computer program 1404 is executed by the processor 1401, the communication device 1400 is caused to perform the method described in the above method embodiments. Optionally, data may also be stored in the memory 1402. The communication device 1400 and the memory 1402 may be provided separately or integrated together.

Optionally, the communication device 1400 may further include a transceiver 1405 and an antenna 1406. The transceiver 1405 may be referred to as a transceiver unit, a transceiving machine, or a transceiver circuit, etc., and is used to implement transceiver functions. The transceiver 1405 may include a receiver and a transmitter. The receiver may be referred to as a receiving machine or a receiving circuit, etc., and is used to implement a receiving function. The transmitter may be referred to as a transmitting machine or a transmitting circuit, etc., and is used to implement the transmitting function.

Optionally, the communication device 1400 may further include one or more interface circuits 1407. The interface circuit 1407 is used to receive code instructions and transmit them to the processor 1401. When the code instructions are executed by the processor 1401, the communication device 1400 is caused to perform the method described in the above method embodiments.

In an implementation, the processor 1401 may include a transceiver for implementing receiving and transmitting functions. For example, the transceiver may be a transceiver circuit, or an interface, or an interface circuit. The transceiver circuit, interface or interface circuit used to implement the receiving and transmitting functions may be separate or integrated. The above-mentioned transceiver circuit, interface or interface circuit may be used for reading and writing codes/data, or the above-mentioned transceiver circuit, interface or interface circuit may be used for transmitting or delivering signals.

In an implementation, the processor 1401 may store a computer program, and the computer program is running on the processor 1401, the communication device 1400 may be caused to perform the method described in the above method embodiments. The computer program may be embedded/solidified in the processor 1401. In this case, the processor 1401 may be implemented by hardware.

In an implementation, the communication device 1400 may include a circuit, which may implement the functions of sending, receiving, or communicating in the aforementioned method embodiments. The processor and transceiver described in the present disclosure may be implemented on an integrated circuit (IC), an analog IC, a radio frequency integrated circuit RFIC, a mixed signal IC, an application specific integrated circuit (ASIC), a printed circuit board (PCB), an electronic device, etc. The processor and transceiver may also be manufactured using various IC process technologies, such as a complementary metal oxide semiconductor (CMOS), a nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be a network device or a UE, but the scope of the communication device described in the present disclosure is not limited herein, and the structure of the communication device may not be limited to FIG. 9. The communication device may be a stand-alone device or may be part of a larger device. For example, the communication device may be:

(1) an independent integrated circuit IC, or a chip, or a chip system or a subsystem;
(2) a collection of one or more ICs. Optionally, the IC collection may also include storage components for storing data and computer programs;
(3) ASIC, such as modem;
(4) modules that may be embedded in other devices;
(5) a receiver, a terminal device, an intelligent terminal device, a cellular phone, a wireless device, a handheld device, a mobile unit, a vehicle-mounted device, a network device, a cloud device, an artificial intelligence device, etc.;
(6) Others, etc.

For the case where the communication device may be a chip or a chip system, reference may be made to the structural diagram of the chip shown in FIG. 10. The chip shown in FIG. 10 includes a processor 1501 and an interface 1502. There may be one or more processors 1501, and there may be a plurality of interfaces 1502.

Optionally, the chip further includes a memory 1503, which is used to store necessary computer programs and data.

Those skilled in the art may also understand that the various illustrative logical blocks and steps listed in the embodiments of the disclosure may be implemented by electronic hardware, computer software, or their combination. Whether such functionality is implemented in hardware or software depends on a specific application and overall system design requirements. Those skilled in the art may use various methods to implement the described functions for each specific application, but such implementation should not be understood as going beyond the protection scope of the embodiments of the disclosure.

The disclosure also provides a readable storage medium on which instructions are stored, and when the instructions are executed by a computer, the functions of any one of the above method embodiments are implemented.

The disclosure also provides a computer program product, which implements the functions of any one of the above method embodiments when executed by a computer.

In the above embodiments, it may be implemented in whole or in part by software, hardware, firmware, or any combination. When implemented in software, it may be implemented in whole or in part in the form of a computer program product. The computer program product includes one or more computer programs. When the computer program is loaded and executed on a computer, the processes or functions described in the embodiments of the disclosure are generated in whole or in part. The computer may be a general-purpose computer, a special-purpose computer, a computer network, or other programmable device. The computer program may be stored in or transferred from one computer-readable storage medium to another. For example, the computer program may be transferred from a website, a computer, a server, or a data center to another website, another computer, another server or another data center through a wired means (such as a coaxial cable, an optical fiber, a digital subscriber line (DSL)) or a wireless means (such as infrared, wireless, microwave, etc.). The computer-readable storage medium may be any available medium that may be accessed by a computer or a data storage device such as a server, a data center, etc. that contains one or more available media integrated. The available media may be magnetic media (e.g., a floppy disk, a hard disk, a tape), optical media (e.g., a digital video disc (DVD)), or semiconductor media (e.g., a solid state disk (SSD)) etc.

The present disclosure proposes a method and apparatus for processing CSI, which may reasonably discard part of the CSI when the UL resource is insufficient and may ensure certain system performance.

Based on this disclosure, an example of embodiments of this solution is as follows.

**For an AI-based CSI feedback, a reporting mode of discarding part of the CSI is as follows.**

- OptO: CSI is reported according to Part 1 and Part 2. Part 2 at least includes codeword quantization information compressed based on the CSI generation model.

  - Opt0-0: for the Layer common/Layer specific or Rank common/Rank specific model, Part 2 is divided into at least two groups, in which codeword quantization information for first $\left\lceil \frac{v}{2} \right\rceil$ transmission layers is placed into a first group, and codeword quantization information for other $\left\lfloor \frac{v}{2} \right\rfloor$ transmission layers is placed into a second group, where v represents a rank value reported by the UE. Optionally, Part 2 is divided into N>2 groups, in which quantization information with $\left\lceil \frac{v}{N} \right\rceil$ bits for each layer is placed into first N-1 groups, and quantization information with $v - (N-1)\left\lceil \frac{v}{N} \right\rceil$ bits is included in the last group. Alternatively, reporting information with $\left\lceil \frac{L}{2} \right\rceil$ bits for each layer is placed into the first group, and reporting information with $\left\lfloor \frac{L}{2} \right\rfloor$ bits for each layer is placed into the second group, where L represents a number of codewords output by the CSI generation model for each layer or a length (its unit is one bit) of quantization information after codeword quantization,. Optionally, Part 2 is divided into N>2 groups, in which quantization information with $\left\lceil \frac{L}{N} \right\rceil$ bits for each layer is placed into first N-1 groups and quantization information with $L - (N-1)\left\lceil \frac{L}{N} \right\rceil$ bits is included in the last group.

  - Opt0-1: for the Rank common or Rank specific model, Part 2 is divided into at least two groups, in which codeword quantization information for first $\left\lceil \frac{X}{2} \right\rceil$ codewords is placed into the first group, and quantization information for remaining $\left\lfloor \frac{X}{2} \right\rfloor$ codewords is placed into the second group, where X represents a number of codewords when the rank is v.

  - Opt0-2: a priority of each codeword is defined as $\mathrm{Pri}(l) = \sum_{i=1}^{Y} i * v + l$ , l = 0, ..., v - 1, where Y represents a number of codewords included in each layer. Alternatively, a priority of quantization information is directly defined as $\mathrm{Pri}(l) = \sum_{i=1}^{Y} i * v + l$ , where Y represents a length of quantization information included in each layer. For Opt0-0 and Opt0-1, a priority of the second group is lower than that of the first group. When the CSI needs to be discarded, a group with low priority is discarded first.

- Opt1: All contents of the CSI report are reported as a whole, that is, they are no longer divided in two parts: Part 1 and Part 2.

  - - Opt1-0: quantization information included in the CSI report is divided into N groups, and indexes of the N groups are ranked in an ascending order. An information length of first N-1 groups is $\left\lceil \frac{L_{tot}}{N} \right\rceil$ and an information length of the last group is $L_{tot} - (N-1) \left\lceil \frac{L_{tot}}{N} \right\rceil$ . The larger the group index, the lower the priority.

  - - Opt1-1: quantization information output by the AI/ML model of CSI generation for each layer included in the CSI is discarded according to the Opt0-0 or Opt0-1.

**AI-based CSI reporting and legacy CSI reporting through one CSI report (corresponding to one CSI reporting ID) fed back to the network device**

- Alt0: the CSI is reported according to Part 1 and Part 2

  - Part 1: only one RI/CQI is reported, and remaining information in Part 1 for both AI-based CSI reporting and legacy CSI reporting is placed into Part 1, for example, information on a number of codewords for each layer or all layers included in Part 1 for AI-based CSI reporting; a number of non-zero coefficients for all layers included in Part 1 for legacy CSI reporting.

    - whether RI/CQI calculation is performed according to AI-based CSI reporting or legacy CSI reporting is determined by a pre-defined manner, network configuring, or terminal indicating.

  - Part 2:

    - Alt0-1: two or more groups of information for AI-based CSI reporting are placed before G0 in Part 2 for legacy CSI reporting or after G2 in Part 2 for legacy CSI reporting.
    - Alt0-2: when information for AI-based CSI reporting is divided into two groups, the two groups of information are respectively included in two groups of Part 2 for legacy CSI reporting. Alternatively, when information for AI-based CSI reporting is divided into three groups, the two groups of information are respectively included in three groups of Part 2 for legacy CSI reporting.

The two groups of information are determined according to the above two-group dividing methods in the Opt0-0 or Opt0-1.
- Alt1: All contents of the CSI report are reported as a whole, that is, they are no longer divided into Part 1 and Part 2.

  - Alt1-0: the CSI report is divided into three parts, in which Part 1 and Part 2 include contents for legacy CSI reporting, and Part 3 includes contents for AI-based CSI reporting. Optionally, Part 2 includes contents for AI-based CSI reporting, and Part 3 includes contents in Part 2 included in legacy CSI reporting.

    Note 1: RI/CQI in Part 1 is reported only once and may be calculated according to AI-based CSI or legacy CSI. Part 3 at least includes codeword quantization information after compression for each layer or transmission rank.
    Note 2: Let Input-CSI-NW represent input information of the AI/ML model for CSI generation at a UE side. If contents of the CSI report also include Input-CSI-NW, the Input-CSI-NW may be reported in the same CSI as the AI-based CSI report and the legacy CSI report. When one CSI is reported, the reported Input-CSI-NW includes a part that is independent of the above parts and is reported separately.

**Example 1 (AI-based CSI reporting):**

Assuming that the AI/ML model for AI-based CSI reporting is layer common, that is, the same AI/ML model is used for all layers, then a number of codewords output based on the CSI generation model is identical, or an information length L after the codewords are quantized is identical. Assuming that L=120 bits and the transmission rank selected by the UE is v=2, Part 2 is divided into two groups, the first group includes quantization information with $L_{1,1}$ bits and $L_{2,1}$ bits, and the second group includes quantization information with $L_{1,2}$ bits and $L_{2,2}$ bits, in which $L_{1,1}=L_{1,2}=L/2=60$ bits represents first half of the quantization information and second half of the quantization information for the first layer; $L_{2,1}=L_{2,2}=L/2=60$ bits represents first half of the quantization information and second half of the quantization information for the second layer. Alternatively, a priority of each piece of quantitative information is determined according to a defined priority. According to

$$\mathrm{Pri}(l) = \sum_{i=1}^{Y} i * v + l$$ , the priority of each piece of quantization information may be determined as shown in Table 2 below, where Y represents a length of quantization information.

Table 2: priority ranking of each piece of quantization information for each layer, with priorities decreasing from left to right

| $i_{1,1}$ | $i_{2,1}$ | $i_{1,2}$ | $i_{2,2}$ | $i_{1,3}$ | $\cdots$ | $i_{1,119}$ | $i_{2,119}$ | $i_{1,120}$ | $i_{2,120}$ |
|---|---|---|---|---|---|---|---|---|---|

In the table, $i_{m,n}$ represents the nth piece of quantization information for the mth layer, and a value of $i_{m,n}$ in the table is determined according to Pri(*l*).

**Example 2 (AI-based CSI reporting and legacy CSI reporting though one CSI report):**

It is assumed that that Part 1 and Part 2 are included in one CSI report through which AI-based CSI reporting and legacy CSI reporting are performed. The information in Part 1 is shown in Table 3 below:

Table 3: CSI information included in Part 1

| Part1 | RI | CQI | a number of non-zero coefficients transmitted for all layers | a length of quantization information output by the CSI generation model for each layer |
|---|---|---|---|---|

Assuming that the transmission rank indicated by RI is 2, a legacy CSI feedback is performed based on the Rel-16 Type II codebook. Assuming that a length L of quantization information output by the CSI generation model for each layer is 120 bits, three groups of quantization information are divided for each layer, each group contains quantization information with 40 bits. When three groups of quantization information are divided for AI-based CSI reporting, the three groups of information are included in Part 2 for legacy CSI reporting, as shown in Table 4 below.

Table 4: CSI information included in Part 1

| Part2 | • G0: SD basis vector indication information and strongest coefficient indication information in each polarization direction<br>• first 40 bits for the first and second layers | • G1: FD basis vector indication information, indication information of a non-zero coefficient with high priority, amplitude and phase quantization information corresponding to non-zero coefficients with high priority except for the strongest coefficient<br>• middle 40 bits for the first and second layers | • G2: indication information of a non-zero coefficient with low priority, amplitude and phase quantization information corresponding to the non-zero coefficient with low priority<br>• last 40 bits for the first and second layers |
|---|---|---|---|

In summary, the present disclosure has the following beneficial technical effects: when the complete CSI cannot be reported based on the UL resource configured by the network device, the UE may select the second CSI with a lower priority of the complete CSI based on the target CSI reporting mode and discard the second CSI, and further report the remaining first CSI with a higher priority of the complete CSI to the network device. The technical solution in the present disclosure may reasonably discard part of the CSI information and may ensure certain system performance by grouping and priority ranking.

The implementations or embodiments of the present disclosure are not exhaustive and are merely illustrations of some implementations or embodiments, which are not intended to limit the scope of protection of the present disclosure. In the absence of conflicts, each step in a certain implementation or embodiment may be implemented as an independent embodiment, and the steps may be arbitrarily combined. For example, a solution after removing some steps in a certain implementation or embodiment may also be implemented as an independent embodiment, and the order of the steps in a certain implementation or embodiment may be arbitrarily exchanged. In addition, optional ways or examples in a certain implementation or embodiment may be arbitrarily combined. In addition, various implementations or embodiments may be arbitrarily combined. For example, some or all steps in different implementations or embodiments may be arbitrarily combined, and a certain implementation or embodiment may be arbitrarily combined with the optional ways or examples in other implementations or embodiments.

In some implementations or embodiments, the terms "in response to", "in the case of", "when", "while", "in case of", "if," etc. in the present disclosure may be replaced with each other.

In some implementations or embodiments, the expressions of the present disclosure, such as "A or B", "A and/or B", "at least one of A or B", "A in one case, B in another case", "in response to one case A, in response to another case B", etc., may include at least one of the following technical solutions according to the situations: executing A independently of B (that is, A in some implementations or embodiments); executing B independently of A (that is, B in some implementations or embodiments); selectively executing A or B (that is, selectively executing A or B in some implementations or embodiments); executing both A and B (that is, A and B in some implementations or embodiments).

In some implementations or embodiments, "including A", "comprising A", "indicating A" and "carrying A" in the present disclosure may be interpreted as directly carrying A or indirectly indicating A.

In addition, each element, each row, or each column in the table involved in the present disclosure may be implemented as an independent embodiment, and a combination of any elements, any rows, and any columns may also be implemented as an independent embodiment.

Those skilled in the art may understand that the first, second, and other numerical numbers involved in the disclosure are only for convenience of description and are not used to limit the scope of the embodiments of the disclosure and also indicate the order.

The term "at least one" in the disclosure may also be described as one or more, and "a plurality of" may be two, three, four or more, which is not limited by the disclosure. In the embodiments of the disclosure, for a technical feature, the technical feature is distinguished by "first", "second", "third", "A", "B", "C" and "D", etc. The technical features described in "first", "second", "third", "A", "B", "C" and "D" are in no particular order or size sequence.

As used herein, the terms "machine-readable medium" and "computer-readable medium" refer to any computer program product, apparatus, and/or device (e.g., a magnetic disk, an optical disk, a memory, a programmable logic device (PLD)) for providing machine instructions and/or data for a programmable processor, including machine-readable media that receive machine instructions as machine-readable signals. The term "machine-readable signal" refers to any signal used to provide machine instructions and/or data for a programmable processor.

The systems and techniques described herein may be implemented in a computing system that includes back-end components (e.g., as a data server), or a computing system that includes middleware components (e.g., an application server), or a computing system that includes front-end components (e.g., a user computer with a graphical user interface or a web browser through which a user may interact with implementations of the systems and techniques described herein), or a computing system that includes any combination of such back-end components, middleware components, or front-end components. The components of the system may be interconnected by any form or medium of digital data communication (e.g., a communication network). Examples of communication networks include a local area network (LAN), a wide area network (WAN), and the Internet.

A computer system may include clients and servers. The client and server are generally remote from each other and typically interact through a communication network. The relationship of client and server arises by virtue of computer programs running on the respective computers and having a client-server relationship to each other.

In some embodiments, the devices, etc. may be interpreted as physical or virtual, and their names are not limited to the names described in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" or the like may be used interchangeably.

In some embodiments, the terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, the access network device, the core network device, or the network device may be replaced by a terminal. For example, the various embodiments of the present disclosure may also be applied to a structure in which communication between the access network device, the core network device, the network device and the terminal is replaced by communication between a plurality of terminals (for example, also referred to as device-to-device (D2D), vehicle-to-everything (V2X), etc.). In this case, the terminal may be configured to have all or part of the functions of the access network device. Furthermore, the words "UL" and "DL" may be replaced with words corresponding to D2D communication (e.g., "side"). For example, a UL channel, a DL channel, etc. may be replaced by a side channel, and a UL, a DL, etc. may be replaced by a sidelink (SL).

In some embodiments, the terminal may be replaced by an access network device, a core network device, or a network device. In this case, the access network device, the core network device, or the network device may be configured to have all or part of the functions of the terminal.

In some embodiments, names of information, etc. are not limited to the names described in the embodiments, and the terms such as "information", "message", "signal", "signaling", "report", " configuration", "indication", "instruction", "command", "channel", "parameter", "domain", "field", "symbol", "symbol (code element)", "codebook", "codeword", "codepoint", "bit", "data", "program", and "chip" may be used interchangeably.

In some embodiments, the terms "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel" and the like may be used interchangeably.

In some embodiments, the terms such as "frame", "radio frame", "subframe", "slot", "sub-slot", "mini-slot", "symbol", "symbol (code element)", and "transmission time interval (TTI)" may be used interchangeably.

In some embodiments, "obtain", "get", "acquire", "receive", "transmit", "bidirectional transmission", "send and/or receive" may be interchangeable, and may be interpreted as receiving from other entities, obtaining from a protocol, obtaining by self-processing, autonomous implementation, etc.

In some embodiments, terms such as "send", "transmit", "report", "issue", "transmit", "bidirectional transmission", "send and/or receive" may be used interchangeably.

In some embodiments, "predetermined" and "preset" may be interpreted as pre-specified in a protocol, etc., or may be interpreted as a pre-set action performed by a device, etc.

In some embodiments, determining may be interpreted as judging/deciding, calculating, computing, processing, deriving, investigating, searching, looking up, search, inquiry, ascertaining, receiving, transmitting, input, output, accessing, resolving, selecting, choosing, establishing, comparing, assuming, expecting, considering, broadcasting, notifying, communicating, forwarding, configuring, reconfiguring, allocating, mapping, assigning, or the like, which is not limited herein.

It should be understood that various forms of the processes shown above may be used, with steps reordered, added, or deleted. For example, the steps described in this disclosure may be executed in parallel, sequentially, or in a different order, as long as the desired results of the technical solutions disclosed in this disclosure may be achieved, which is not limited herein.

Furthermore, it should be understood that the various embodiments of the present disclosure may be implemented individually or in combination with other embodiments where the solution permits.

Those skilled in the art may be aware that the units and algorithm steps of each example described in conjunction with the embodiments disclosed herein may be implemented with electronic hardware, or a combination of computer software and electronic hardware. Whether these functions are executed in hardware or software depends on a specific application and design constraints of the technical solution. Those skilled in the art may implement the described functionality using different methods for each specific application, but such implementations should not be considered to go beyond the scope of the disclosure.

Those skilled in the art may clearly understand that for the convenience and simplicity of description, the specific working processes of the systems, devices and units described above may be referred to the corresponding processes in the foregoing method embodiments, which will not be repeated here.

The above are only specific embodiments of the disclosure, but the protection scope of the disclosure is not limited. Any person in the technical field may easily think of changes or substitutions within the technical scope disclosed in the disclosure, which should be covered by the protection scope of the disclosure. Therefore, the protection scope of the disclosure should be determined by the protection scope of the claims.

**Claims**

1. A method for processing channel state information (CSI), applied to a user equipment (UE), comprising:

   receiving configuration information sent by a network device, wherein the configuration information is used for configuring an uplink (UL) resource;
   in a case that the UL resource is insufficient for reporting complete CSI, reporting a first CSI of the complete CSI to the network device in a target CSI reporting mode, wherein the target CSI reporting mode comprises an artificial intelligence (AI)-based CSI reporting mode and/or a legacy CSI reporting mode, and the first CSI is obtained after discarding a second CSI of the complete CSI.

2. The method according to claim 1, further comprising:
   determining the second CSI to be discarded of the complete CSI based on the target CSI reporting mode.

3. The method according to claim 2, wherein in a case that the target CSI reporting mode is the AI-based CSI reporting mode, determining the second CSI to be discarded of the complete CSI based on the target CSI reporting mode comprises:

   dividing the complete CSI into a CSI Part 1 and a CSI Part 2, wherein the CSI Part 2 at least comprises a codeword or codeword quantization information;
   dividing the codeword quantization information into N groups, determining a priority of each group according to a group index, and sequentially determining each codeword quantization information group as the second CSI to be discarded in an ascending priority order, until a size of the first CSI is less than or equal to a size of the UL resource, wherein N is greater than or equal to 2; or
   determining a priority of each codeword or each piece of codeword quantization information corresponding to each transmission layer, dividing the codeword or the codeword quantization information into N groups in a descending priority order, determining a priority of each group according to a group index, and sequentially determining each codeword group or each codeword quantization information group as the second CSI to be discarded in the ascending priority order, until a size of the first CSI is less than or equal to a size of the UL resource, wherein N is greater than or equal to 2.

4. The method according to claim 2, wherein in a case that the target CSI reporting mode is the AI-based CSI reporting mode, determining the second CSI to be discarded of the complete CSI based on the target CSI reporting mode includes:

   dividing the complete CSI into N groups, determining a priority of each group according to a group index, and sequentially determining each CSI group as the second CSI to be discarded in an ascending priority order, until a size of the first CSI is less than or equal to a size of the UL resource, wherein N is greater than or equal to 2; or
   dividing codeword quantization information included in the complete CSI into N groups, determining a priority of each group according to a group index, and sequentially determining each codeword quantization information group as the second CSI to be discarded in an ascending priority order, until a size of the first CSI is less than or equal to the size of the uplink resource, wherein N is greater than or equal to 2.

5. The method according to claim 4, wherein dividing the complete CSI into N groups comprises:
   placing, in the complete CSI, codeword quantization information with a corresponding quantization information length of $\frac{L_{tot}}{N}$ into first N-1 groups, and codeword quantization information with a corresponding quantization information length of $L_{tot} - (N-1)\frac{L_{tot}}{N}$ into a last group of the N groups, wherein $L_{tot}$ is a total information length of the complete CSI, and $\frac{L_{tot}}{N}$ is a value obtained by performing an up or down rounding operation thereon.

6. The method according to claim 4, wherein dividing codeword quantization information included in the complete CSI into N groups comprises:

   placing, in the complete CSI, codeword quantization information for $\frac{v}{N}$ transmission layers into first N-1 groups, and codeword quantization information for $v - (N-1)\frac{v}{N}$ transmission layers into a last group of the N groups, wherein $v$ is a transmission rank value reported by the UE, and $\frac{v}{N}$ is a value obtained by performing an up or down rounding operation thereon; or

placing, in the complete CSI and for each transmission layer, codeword quantization information with a corresponding quantization information length of $\frac{L}{N}$ into first N-1 groups, and codeword quantization information with a corresponding quantization information length of $L - (N-1)\frac{L}{N}$ into a last group of the N groups, wherein $L$ is a number of codewords output by a CSI generation model for each transmission layer or a quantization information length after codeword quantization, and $\frac{L}{N}$ is a value obtained by performing an up or down rounding operation thereon; or

placing, in the complete CSI and for each transmission layer, codeword quantization information with a corresponding quantization information length of $\frac{X}{N}$ into first N-1 groups, and codeword quantization information with a corresponding quantization information length of $X - (N-1)\frac{X}{N}$ into a last group of the N groups, wherein X is a number of codewords output by a CSI generation model for each transmission layer or a quantization information length after codeword quantization when a rank is $v$, and $\frac{X}{N}$ is a value obtained by performing an up or down rounding operation thereon.

7. The method according to claim 2, wherein in a case that the target CSI reporting mode is the AI-based CSI reporting mode and the legacy CSI reporting mode, and determining the second CSI to be discarded of the complete CSI based on the target CSI reporting mode comprises:

   determining a third CSI that needs to be reported in the AI-based CSI reporting mode and a fourth CSI that needs to be reported in the legacy CSI reporting mode;
   determining the second CSI from the third CSI and the fourth CSI.

8. The method according to claim 7, wherein determining the second CSI from the third CSI and the fourth CSI comprises:

   determining the fourth CSI as the second CSI; or
   combining a CSI Part 2 corresponding to the third CSI and a CSI Part 2 corresponding to the fourth CSI, and determining the second CSI from a combined CSI Part 2.

9. The method according to claim 8, wherein combining the CSI Part 2 corresponding to the third CSI and the CSI Part 2 corresponding to the fourth CSI comprises:

   configuring each group of codeword quantization information in the CSI Part 2 corresponding to the third CSI before G0 group information of the CSI Part 2 corresponding to the fourth CSI or after G2 group information of the CSI Part 2 corresponding to the fourth CSI; or
   inserting each group of codeword quantization information in the CSI Part 2 corresponding to the third CSI into different group information of the CSI Part 2 corresponding to the fourth CSI, respectively.

10. The method according to claim 9, wherein determining the second CSI from the combined CSI Part 2 comprises: dividing the combined CSI Part 2 into N groups, determining a priority of each group according to a group index, and sequentially determining each CSI Part 2 group as the second CSI to be discarded in an ascending priority order, until a size of the first CSI is less than or equal to a size of the UL resource, where N is greater than or equal to 2.

11. The method according to claim 7, wherein determining the second CSI from the third CSI and the fourth CSI comprises:

   dividing the complete CSI into a CSI Part 1, a CSI Part 2, and a CSI Part 3, wherein the CSI Part 1 and the CSI Part 3 are used to report the fourth CSI, and the CSI Part 2 is used to report the third CSI; and
   determining a non-zero coefficient in the CSI Part 3 that does not meet UL resource transmission as the second CSI.

**12.** The method according to claim 7, wherein determining the second CSI from the third CSI and the fourth CSI comprises:

dividing the complete CSI into a CSI Part 1, a CSI Part 2, and a CSI Part 3, wherein the CSI Part 1 and the CSI Part 2 are used to report the fourth CSI, the CSI Part 3 is used to report the third CSI, and the CSI Part 3 at least comprises a codeword or codeword quantization information;

dividing the codeword quantization information into N groups, determining a priority of each group according to a group index, and sequentially determining each codeword quantization information group as the second CSI to be discarded in an ascending priority order, until a size of the first CSI is less than or equal to a size of the UL resource, wherein N is greater than or equal to 2; or

determining a priority of each codeword or each piece of codeword quantization information corresponding to each transmission layer, dividing the codeword or codeword quantization information into N groups in a descending priority order, determining a priority of each group according to a group index, and sequentially determining each codeword group or each codeword quantization information group as the second CSI to be discarded in the ascending priority order, until a size of the first CSI is less than or equal to a size of the UL resource, wherein N is greater than or equal to 2.

**13.** The method according to claim 3 or 12, wherein dividing the codeword quantization information into N groups comprises:

placing codeword quantization information for $\frac{v}{N}$ transmission layers into first N-1 groups, and codeword quantization information for $v - (N-1)\frac{v}{N}$ transmission layers into a last group of the N groups, wherein $v$ is a transmission rank value reported by the UE, and $\frac{v}{N}$ is a value obtained by performing an up or down rounding operation thereon; or

placing, for each transmission layer, codeword quantization information with a corresponding quantization information length of $\frac{L}{N}$ into first N-1 groups, and codeword quantization information with a quantization information length of $L - (N-1)\frac{L}{N}$ into a last group of the N groups, wherein $L$ is a number of codewords output by a CSI generation model for each transmission layer or a quantization information length after codeword quantization, and $\frac{L}{N}$ is a value obtained by performing an up or down rounding operation thereon; or

placing, for each transmission layer, codeword quantization information with a corresponding quantization information length of $\frac{X}{N}$ into first N-1 groups, and codeword quantization information with a corresponding quantization information length of $X - (N-1)\frac{X}{N}$ into a last group of the N groups, wherein X is a number of codewords output by a CSI generation model for each transmission layer or a quantization information length after codeword quantization when a rank is $v$, and $\frac{X}{N}$ is a value obtained by performing an up or down rounding operation thereon.

**14.** The method according to claim 3 or 12, wherein determining the priority of each codeword or each codeword quantization information corresponding to each transmission layer comprises:

determining the priority of each codeword or each codeword quantization information corresponding to each transmission layer according to a transmission layer index; or

determining the priority of each codeword corresponding to each transmission layer according to a codeword priority calculation formula; or

determining the priority of each codeword quantization information corresponding to each transmission layer according to a quantization information priority calculation formula.

**15.** The method according to any one of claims 1 to 14, further comprising:
receiving indication information sent by the network device, wherein the indication information indicates the target CSI reporting mode.

**16.** The method according to any one of claims 1 to 14, further comprising:
reporting input information Input-CSI-NW of a CSI generation model to the network device in the target CSI reporting mode.

**17.** A method for processing channel state information (CSI), applied to a network device, comprising:

sending configuration information to a user equipment (UE), wherein the configuration information is used for configuring an uplink (UL) resource; and
receiving a first CSI of complete CSI reported by the UE in a target CSI reporting mode, wherein the target CSI reporting mode comprises an artificial intelligence (AI)-based CSI reporting mode and/or a legacy CSI reporting mode, and the first CSI is obtained by the UE after discarding a second CSI from the complete CSI in a case that the UL resource is insufficient for reporting the complete CSI.

**18.** The method according to claim 17, further comprising:
sending indication information to the UE, wherein the indication information indicates the target CSI reporting mode.

**19.** The method according to claim 17, further comprising:
receiving input information Input-CSI-NW of a CSI generation model reported by the UE in the target CSI reporting mode.

**20.** An apparatus for processing channel state information (CSI), applied to a user equipment (UE), comprising:

a receiving module, configured to receive configuration information sent by a network device, wherein the configuration information is used for configuring an uplink (UL) resource; and
a sending module, configured to report a first CSI of the complete CSI to the network device in a target CSI reporting mode in a case that the UL resource is insufficient for reporting the complete CSI, wherein the target CSI reporting mode comprises an artificial intelligence (AI)-based CSI reporting mode and/or a legacy CSI reporting mode, and the first CSI is obtained after discarding a second CSI of the complete CSI.

**21.** An apparatus for processing channel state information (CSI), applied to a network device, comprising:

a sending module, configured to send configuration information to a user equipment (UE), wherein the configuration information is used for configuring an uplink (UL) resource; and
a receiving module, configured to receive a first CSI of the complete CSI reported by the UE in a target CSI reporting mode, wherein the target CSI reporting mode comprises an artificial intelligence (AI)-based CSI reporting mode and/or a legacy CSI reporting mode, and the first CSI is obtained by the UE after discarding a second CSI from the complete CSI in a case that the UL resource is insufficient for reporting the complete CSI.

**22.** A communication device, comprising: a transceiver; a memory; and a processor, connected to the transceiver and the memory, respectively, wherein the processor is configured to control wireless signal reception and transmission of the transceiver by executing computer-executable instructions on the memory, and capable of implementing the method according to any one of claims 1 to 19.

**23.** A computer storage medium having computer-executable instructions stored thereon that, when executed by a processor, cause the method according to any one of claims 1 to 19 to be implemented.

**24.** A communication system, comprising

a user equipment (UE), configured to perform the method according to any one of claims 1 to 16; and
a network device, configured to perform the method according to any one of claims 17 to 19.

UE

DL channel $H$ → | CSI generation model | — binary bit stream s → gNB | CSI reconstruction model | → reconstructed DL channel $H'$

FIG. 1

| receiving configuration information sent by a network device, in which the configuration information is used for configuring an uplink (UL) resource | 101 |

↓

| in a case that the UL resource is insufficient for reporting complete CSI, reporting a first CSI of the complete CSI to the network device in a target CSI reporting mode, in which the first CSI is obtained after discarding a second CSI of the complete CSI | 102 |

FIG. 2

| receiving configuration information sent by a network device, in which the configuration information is used for configuring a UL resource | 201 |

↓

| in a case that the UL resource is insufficient for reporting complete CSI, in response to the target CSI reporting mode being an AI-based CSI reporting mode, determining a second CSI to be discarded of the complete CSI and discarding the second CSI to be discarded of the complete CSI to obtain a first CSI of the complete CSI | 202 |

↓

| reporting the first CSI of the complete CSI to the network device | 203 |

FIG. 3

| receiving configuration information sent by a network device, in which the configuration information is used for configuring a UL resource | 301 |

↓

| in a case that the UL resource is insufficient for reporting complete CSI, in response to the target CSI reporting mode being an AI-based CSI reporting mode and a legacy CSI reporting mode, determining a second CSI to be discarded of the complete CSI and discarding the second CSI to be discarded of the complete CSI to obtain a first CSI of the complete CSI | 302 |

↓

| reporting the first CSI of the complete CSI to the network device | 303 |

FIG. 4

sending configuration information to a user equipment (UE), in which the configuration information is used for configuring an uplink (UL) resource ⌇ 401

receiving a first CSI of complete CSI reported by the UE in a target CSI reporting mode, in which the target CSI reporting mode comprises an AI-based CSI reporting mode and/or a legacy CSI reporting mode, and the first CSI is obtained by the UE after discarding a second CSI from the complete CSI in a case that the UL resource is insufficient for reporting the complete CSI ⌇ 402

FIG. 5

| UE | | network device |

501, the network device sends configuration information to the UE, in which the configuration information is used for configuring a UL resource

502, when the UL resource is insufficient for reporting complete CSI, the UE determines a second CSI to be discarded from the complete CSI based on a target CSI reporting mode

503, the UE discards the second CSI from the complete CSI and obtains a first CSI of the complete CSI

504, the UE reports the first CSI to the network device

FIG. 6

apparatus 600 for processing CSI

receiving module ⌇ 610

sending module ⌇ 620

processing module ⌇ 630

FIG. 7

apparatus 700 for processing CSI

sending module ⟍ 710

receiving module ⟍ 720

FIG. 8

1400

1407

processor

computer program

1401

1403

interface circuit

1402

1405    1406

memory

computer program

transceiver    antenna

1404

FIG. 9

chip

processor ⌐1501

interface ⌐1502

memory ⌐1503

FIG. 10

## INTERNATIONAL SEARCH REPORT

| International application No. |
| --- |
| **PCT/CN2023/087146** |

### A. CLASSIFICATION OF SUBJECT MATTER

H04W 24/10(2009.01)i

According to International Patent Classification (IPC) or to both national classification and IPC

### B. FIELDS SEARCHED

Minimum documentation searched (classification system followed by classification symbols)

IPC:H04W,H04B

Documentation searched other than minimum documentation to the extent that such documents are included in the fields searched

Electronic data base consulted during the international search (name of data base and, where practicable, search terms used)

CNTXT: ENTXT; DWPI; CNKI; 3GPP: 资源, 不足, 不够, 有限, 受限, 限制, 少, 丢弃, 丢掉, 舍弃, 去掉, CSI, 反馈, AI, 人工智能, resource, enough, limit, artificial intelligence, discard, channel state information, channel status information, feedback

### C. DOCUMENTS CONSIDERED TO BE RELEVANT

| Category* | Citation of document, with indication, where appropriate, of the relevant passages | Relevant to claim No. |
| --- | --- | --- |
| X | WO 2022194822 A1 (FRAUNHOFER GESELLSCHAFT ZUR FOERDERUNG DER ANGEWANDTEN FORSCHUNG E.V.) 22 September 2022 (2022-09-22) description, page 34, line 16-page 65, line 27 | 1-24 |
| Y | WO 2022194822 A1 (FRAUNHOFER GESELLSCHAFT ZUR FOERDERUNG DER ANGEWANDTEN FORSCHUNG E.V.) 22 September 2022 (2022-09-22) description, page 34, line 16-page 65, line 27 | 1-24 |
| X | CN 114760654 A (BEIJING UNISOC COMMUNICATION TECHNOLOGY CO., LTD.) 15 July 2022 (2022-07-15) description, paragraphs 0038-0174 | 1-24 |
| Y | CN 114760654 A (BEIJING UNISOC COMMUNICATION TECHNOLOGY CO., LTD.) 15 July 2022 (2022-07-15) description, paragraphs 0038-0174 | 1-24 |
| X | CN 111277360 A (VIVO MOBILE COMMUNICATION CO., LTD.) 12 June 2020 (2020-06-12) description, paragraphs 0069-0249 | 1-24 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 December 2023** | **12 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/087146** |

### C. DOCUMENTS CONSIDERED TO BE RELEVANT

| Category* | Citation of document, with indication, where appropriate, of the relevant passages | Relevant to claim No. |
| --- | --- | --- |
| Y | CN 111277360 A (VIVO MOBILE COMMUNICATION CO., LTD.) 12 June 2020 (2020-06-12)<br>    description, paragraphs 0069-0249 | 1-24 |
| A | WO 2023042945 A1 (LG ELECTRONICS, INC.) 23 March 2023 (2023-03-23)<br>    entire document | 1-24 |
| A | 3GPP. "3rd Generation Partnership Project; Technical Specification Group Radio Access Network; NR; Physical layer procedures for data; (Release 17)"<br>*3GPP TS 38.214 V17.4.0 (2022-12)*, 30 December 2022 (2022-12-30),<br>    sections 5.2.3, 5.2.4, and 5.2.5 | 1-24 |

Form PCT/ISA/210 (second sheet) (July 2022)

## INTERNATIONAL SEARCH REPORT
### Information on patent family members

International application No.

**PCT/CN2023/087146**

| Patent document cited in search report | | | Publication date (day/month/year) | Patent family member(s) | | | Publication date (day/month/year) |
|---|---|---|---|---|---|---|---|
| WO | 2022194822 | A1 | 22 September 2022 | None | | | |
| CN | 114760654 | A | 15 July 2022 | WO | 2022148490 | A1 | 14 July 2022 |
| CN | 111277360 | A | 12 June 2020 | None | | | |
| WO | 2023042945 | A1 | 23 March 2023 | None | | | |

Form PCT/ISA/210 (patent family annex) (July 2022)